# EUROPEAN PATENT APPLICATION

(11) **EP 2 296 301 A1**
(43) Date of publication of application: **16.03.2011**
(21) Application number: 09770197.3
(22) Date of filing: 24.06.2009
(51) Int. Cl.: H04J 11/00, H04J 1/00, H04W 72/04

(54) **RADIO COMMUNICATION SYSTEM, BASE STATION DEVICE, MOBILE STATION DEVICE, RADIO TRANSMISSION METHOD, AND RADIO RECEPTION METHOD**

(30) Priority: 24.06.2008 JP 2008165111
(71) Applicant: Sharp Kabushiki Kaisha, Osaka-shi, Osaka 545-8522 (JP)
(72) Inventor: SUZUKI, Shoichi, Osaka 545-8522 (JP); NAKASHIMA, Daiichiro, Osaka 545-8522 (JP); YAMADA, Shohei, Osaka 545-8522 (JP); AKIMOTO, Yosuke, Osaka 545-8522 (JP)
(74) Representative: Müller - Hoffmann & Partner
(86) International application number: PCT/JP2009/061529
(87) International publication number: WO 2009/157487

(57) **Abstract**

A base station device time-multiplexes a first-type sub-frame to which first-type data is allocated and a second-type sub-frame to which second-type data is allocated. The base station device includes: a radio resource controller that determines a type of each of sub-frames; a first-type control signal generator that generates a first-type control signal including items according to the type of the sub-frame to be allocated; and a second-type control signal generator that generates a second-type control signal that is allocated to a predetermined region of each of the sub-frames, the second-type control signal indicating a region in the sub-frame to be allocated, the first-type control signal being allocated to the region, the second-type control signal further indicating, in addition to the region, a type of the sub-frame to be allocated when the sub-frame to be allocated is specified as a sub-frame to which the first-type sub-frame is allocatable by first-type sub-frame candidate information that specifies a sub-frame to which the first-type sub-frame is allocatable, the first-type sub-frame candidate information being previously stored. Accordingly, the type of sub-frame can be determined without causing a decrease in transmission efficiency. Additionally, the number of downlink control channel decoding processes can be decreased.

## Description

### TECHNICAL FIELD

The present invention relates to a wireless communication system, a base station device, a mobile station device, a wireless transmission method, and a wireless reception method.
Priority is claimed on Japanese Patent Application No. 2008-165111, filed June 24, 2008, the content of which is incorporated herein by reference.

### BACKGROUND ART

As a third generation (3G) wireless access method for cellular mobile communication, W-CDMA (Wideband Code Division Multiple Access) has been standardized by the 3GPP (3rd Generation Partnership Project), and cellular mobile communication services using W-CDMA has been provided. Additionally, evolved universal terrestrial radio access (hereinafter, referred to as "E-UTRA") and evolved universal terrestrial radio access network (hereinafter, referred to as "E-UTRAN") have been considered by the 3GPP.

OFDM (Orthogonal Frequency Division Multiplexing), which is a multi-carrier transmission scheme, has been proposed for an E-UTRA downlink that is transmission from a base station device to a mobile station device. Additionally, DFT-Spread OFDM (Discrete Fourier Transform-Spread OFDM), which is a single-carrier transmission scheme, has been proposed for an E-UTRA uplink that is transmission from a mobile station device to a base station device.

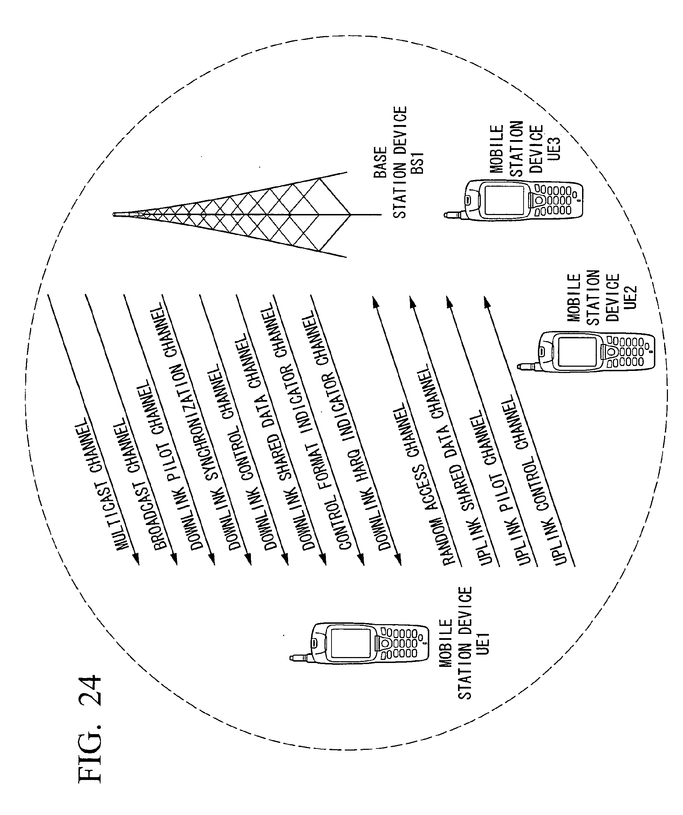

FIG. 24 illustrates a schematic structure of channels in E-UTRA. A base station device BS1 performs wireless communication with mobile station devices UE1, UE2, and UE3. The E-UTRA downlink, which is wireless communication from the base station device BS1 to the mobile station devices UE1, UE2, and UE3, includes a downlink pilot channel, a downlink synchronization channel, a broadcast channel, a downlink control channel, a downlink shared data channel, a control format indicator channel, a downlink HARQ (Hybrid Automatic Repeat reQuest) indicator channel, and a multicast channel. The E-UTRA uplink, which is wireless communication from the mobile station devices UE1, UE2, and UE3 to the base station device BS1, includes an uplink pilot channel, a random access channel, an uplink control channel, and an uplink shared data channel.

### <Unicast Sub-frame>

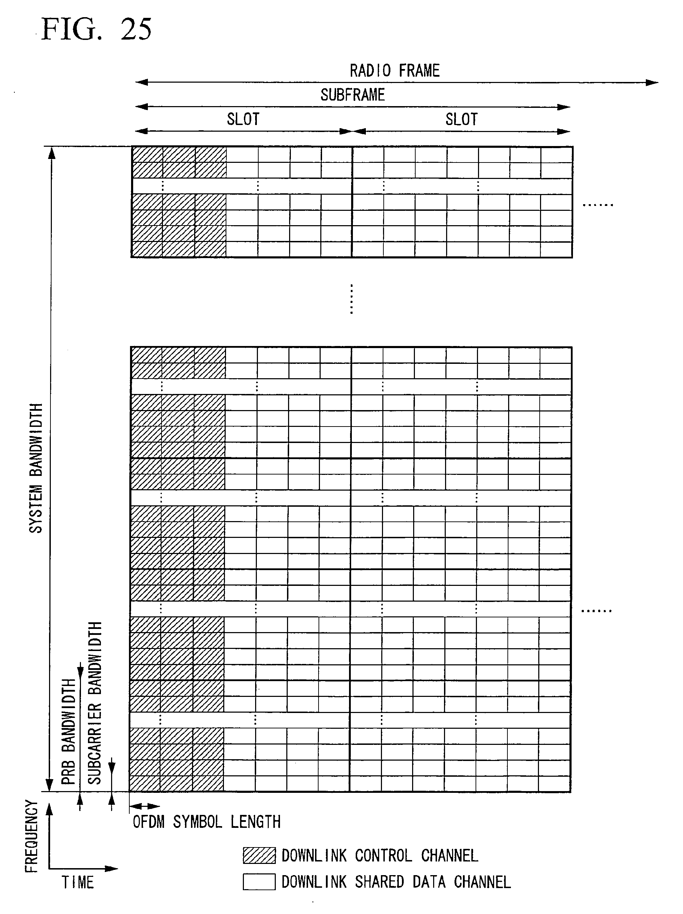

FIG. 25 illustrates a schematic structure of an E-UTRA downlink radio frame (section 6.2 of Non-Patent Document 1). FIG. 25 illustrates, as an example, a schematic structure of a radio frame upon time-multiplexing of the downlink control channel and the downlink shared data channel. The horizontal and vertical axes shown in FIG. 25 denote time and frequency axes, respectively. The downlink radio frame is a unit of a radio resource assignment and the like for localized transmission and includes multiple PRB (Physical Resource Block) pairs. The PRB pair is defined by a frequency band (PRB bandwidth) and a time band (2 slots=1 sub-frame) which have predetermined widths. Basically, one PRB pair includes two consecutive PRBs (PRB bandwidth×slot) in the time domain.

Regarding a sub-frame in which the downlink control channel and the downlink shared data channel are time-multiplexed (hereinafter, referred to as a "unicast sub-frame"), one PRB includes 12 subcarriers in the frequency domain and 7 OFDM symbols in the time domain. A system bandwidth is a communication bandwidth of the base station device. In the time domain, a slot includes 7 OFDM symbols, a sub-frame includes two slots, and a radio frame includes 10 sub-frames.
A unit defined by one subcarrier and one OFDM symbol is referred to as a resource element. In the downlink radio frame, multiple PRBs are allocated according to the system bandwidth. A structure of an MBSFN sub-frame (Multicast/Broadcast over Single Frequency Network Sub-frame, hereinafter referred to as "multicast sub-frame"), in which a multicast channel is time-multiplexed with the downlink control channel, will be explained later.

At least the downlink shared data channel for transmitting information data and system information and the downlink control channel for transmitting control data are allocated in each unicast sub-frame.
The system information includes information required for the base station device and the mobile station device to communicate with each other. The system information is periodically transmitted to an unspecified number of mobile station devices on the broadcast channel and the downlink shared data channel. Items of system information allocated to the broadcast channel differ from those allocated to the downlink shared data channel. The system information allocated to the broadcast channel includes a system bandwidth, setting information of the downlink HARQ indicator channel, the number of transmit antennas, and the like. The system information allocated to the downlink shared data channel includes uplink and downlink transmit power control information, setting information of sub-frames for neighbour base station devices, setting information of a sub-frame for the base station device (serving base station device), and the like.

The downlink pilot channel for channel estimation of the downlink shared data channel and the downlink control channel is not illustrated in FIG. 25, and allocation thereof will be explained later. FIG. 25 shows a case where the downlink control channels are allocated to the first, second, and third OFDM symbols, which are counted from the starting position of a sub-frame, and the downlink shared data channels are allocated to other OFDM symbols. The number of OFDM symbols, to which the downlink control channels are allocated, varies in units of sub-frames.

Although not shown in FIG. 25, the control format indicator channel, which indicates the number of OFDM symbols forming the downlink control channels, is allocated to a predetermined frequency position of the first OFDM symbol. The downlink control channel is allocated to only the first OFDM symbol in one case, to the first and second OFDM symbols in another case, to the first to third OFDM symbols in another case, or the like. Allocation of the control format indicator channel will be explained later. Similarly, although not shown in FIG. 25, the downlink HARQ indicator channel is allocated to an OFDM symbol to which the downlink control channel is allocated. In other words, the downlink HARQ indicator channel is frequency-multiplexed with the downlink control channel. The downlink control channel and the downlink shared data channel are not allocated to the same OFDM symbol. Multiple pieces of uplink radio resource assignment information, downlink radio resource assignment information, transmit power command information, and the like are allocated to the downlink control channels in the unicast sub-frame. The details of information allocated to the downlink control channel will be explained later.

### <Pilot Channel in Unicast Sub-frame>

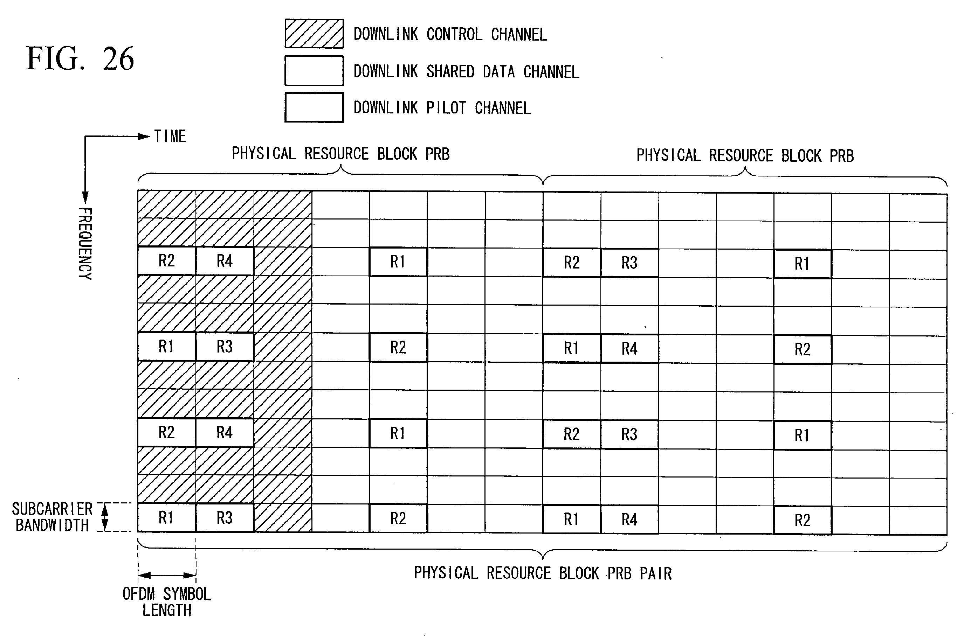

FIG. 26 illustrates allocation of the downlink pilot channels included in one PRB pair in an E-UTRA downlink unicast sub-frame (section 6.10.1 of Non-Patent Document 1). The horizontal and vertical axes shown in FIG. 26 denote time and frequency axes, respectively. A case where the base station device has four transmit antennas (a transmit antenna 1, a transmit antenna 2, a transmit antenna 3, and a transmit antenna 4) is explained here. In FIG. 26, a resource element assigned reference numeral R1 denotes a resource element of the downlink pilot channel to be transmitted from the transmit antenna 1. A resource element assigned reference numeral R2 denotes a resource element of the downlink pilot channel to be transmitted from the transmit antenna 2. A resource element assigned reference numeral R3 denotes a resource element of the downlink pilot channel to be transmitted from the transmit antenna 3. A resource element assigned reference numeral R4 denotes a resource element of the downlink pilot channel to be transmitted from the transmit antenna 4.

When the base station device has only two transmit antennas, the downlink control channels are transmitted on the resource elements R3 and R4 in the second OFDM symbol. The downlink shared data channels are transmitted on the resource elements R3 and R4 in the ninth OFDM symbol.
The broadcast channel and the downlink synchronization channel have little relation to the present invention, and therefore detailed explanations thereof are omitted here. However, the broadcast channel and the downlink synchronization channel are allocated to a predetermined resource element in a predetermined sub-frame.

### <Structure of Multicast Sub-frame>

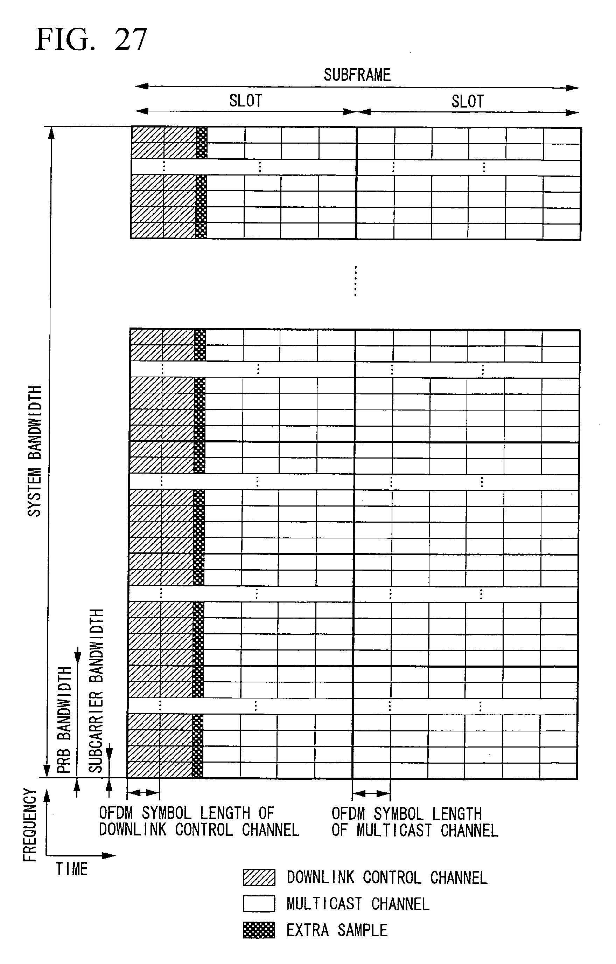

FIG. 27 illustrates a schematic structure of a multicast sub-frame in the E-UTRA downlink (section 6.5 and 6.10.2 of Non-Patent Document 1). The horizontal and vertical axes shown in FIG. 27 denote time and frequency axes, respectively. In the multicast sub-frame, one PRB includes 12 subcarriers in the frequency domain and 6 OFDM symbols in the time domain. In the time domain, a slot includes 6 OFDM symbols, and a sub-frame includes 2 slots.

At least the multicast channel for transmitting multiple MBMS data (Multimedia Broadcast/Multicast Service data, hereinafter referred to as "multicast data") and the downlink control channel for transmitting control data are allocated to each multicast sub-frame. The downlink pilot channel used for channel estimation of the multicast channel and the downlink control channel is not shown in FIG. 27, and allocation thereof will be explained later. FIG. 27 shows a case where the downlink control channels are allocated to the first and second OFDM symbols counted from the starting position of the sub-frame, and the multicast channels are allocated to other OFDM symbols. However, the number of OFDM symbols, to which the downlink control channels are allocated, varies in units of sub-frames.

The number of OFDM symbols included in the multicast sub-frame is smaller than that of OFDM symbols included in the unicast sub-frame. However, the length of the OFDM symbol to which the multicast channels are allocated is larger than the length of an OFDM symbol in the unicast sub-frame. Consequently, the time length of a slot in the multicast sub-frame is equal to that of a slot in the unicast sub-frame. However, the length of the OFDM symbols in the multicast sub-frame, to which the downlink control channels (units hatched with diagonal lines) are allocated, is equal to the length of the OFDM symbols in the unicast sub-frame, to which the downlink control channels are allocated. To make the time length of the multicast sub-frame equal to that of the unicast sub-frame, extra samples (densely-hatched units) are allocated in the multicast sub-frame between the OFDM symbols for the downlink control channels and the OFDM symbols for the multicast channels. For example, "0" may be allocated as the extra sample.

Although not shown in FIG. 27, the control format indicator channel, which indicates the number of OFDM symbols forming the downlink control channels, is allocated to a predetermined frequency position of the first OFDM symbol. The downlink control channel is allocated to only the first OFDM symbol in one case, to the first and second OFDM symbols in another case, or the like. Different from the unicast sub-frame, the downlink control channel is not allocated to the third OFDM symbol in the multicast sub-frame. Allocation of the control format indicator channel will be explained later.

Similarly, although not shown in FIG. 27, the downlink HARQ indicator channel is allocated to an OFDM symbol to which the downlink control channels are allocated. In other words, the downlink HARQ indicator channel is frequency-multiplexed with the downlink control channel. The downlink control channel and the multicast channel are not allocated to the same OFDM symbol. Uplink radio resource assignment information, transmit power command information, and the like are allocated to the downlink control channel in the multicast sub-frame. Downlink radio resource assignment information is not allocated to the downlink control channel in the multicast sub-frame. The details of information allocated to the downlink control channel will be explained later.

### <Pilot Channel in Multicast Sub-frame>

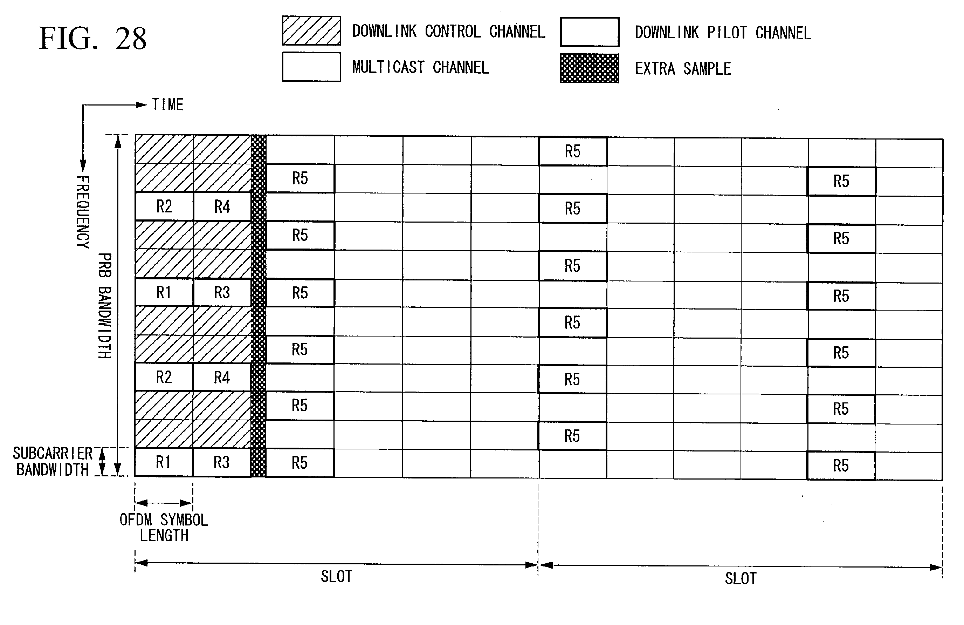

FIG. 28 illustrates allocation of the downlink pilot channels included in one PRB pair in the E-UTRA downlink multicast sub-frame (section 6.10.2 of Non-Patent Document 1). The horizontal and vertical axes shown in FIG. 28 denote time and frequency axes, respectively. A case where the base station device has five transmit antennas (a transmit antenna 1, a transmit antenna 2, a transmit antenna 3, a transmit antenna 4, and a transmit antenna 5) is explained here. A resource element assigned reference numeral R1 denotes a resource element of the downlink pilot channel to be transmitted from the transmit antenna 1. A resource element assigned reference numeral R2 denotes a resource element of the downlink pilot channel to be transmitted from the transmit antenna 2. A resource element assigned reference numeral R3 denotes a resource element of the downlink pilot channel to be transmitted from the transmit antenna 3. A resource element assigned reference numeral R4 denotes a resource element of the downlink pilot channel to be transmitted from the transmit antenna 4. A resource element assigned reference numeral R5 denotes a resource element of the downlink pilot channel to be transmitted from the transmit antenna 5.

The resource elements R1, R2, R3, and R4 are allocated to OFDM symbols forming the downlink control channels. Allocation of the resource elements R1, R2, R3, and R4 is the same as that in the case of the unicast sub-frame. The resource elements R1, R2, R3, and R4 are used for channel compensation on the downlink control channels. The resource element R5 is allocated to OFDM symbols forming the multicast channels, and is used for channel compensation on the multicast channels.
In the case of FIG. 28, the downlink control channels are transmitted using the transmit antennas 1 to 4, and therefore the resource elements R1, R2, R3, and R4 are necessary to perform channel compensation on the downlink control channels. For this reason, the downlink control channels are always allocated to both first and second OFDM symbols.

### <Control Format Indicator Channel>

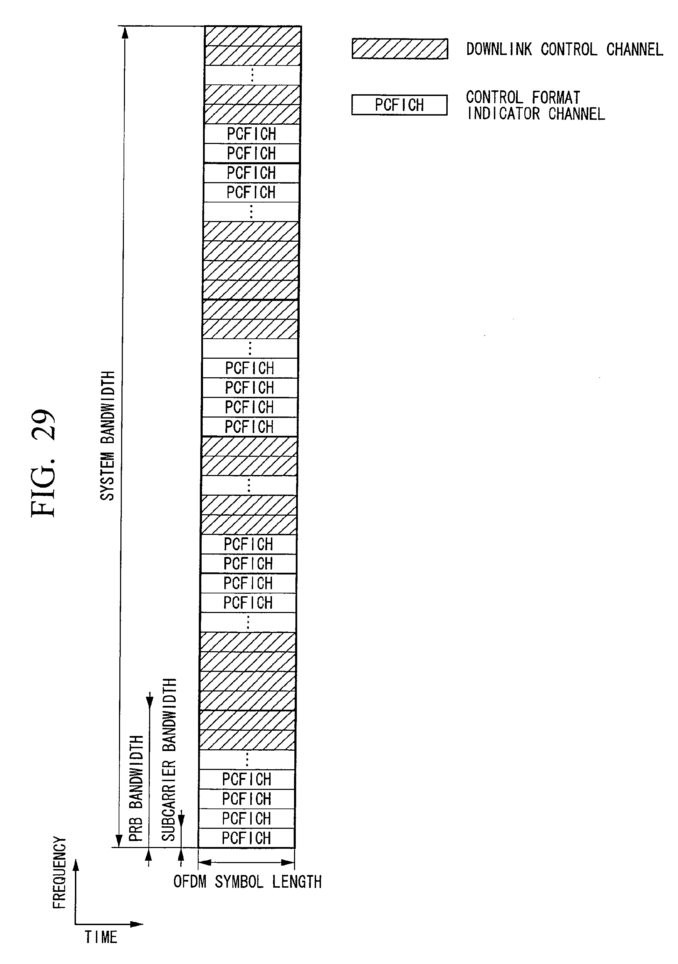

FIG. 29 illustrates allocation of PCFICH (Physical Control Format Indicator Channel) indicating the size of downlink control channels (section 6.7 of Non-Patent Document 1). In E-UTRA downlink, allocation of control format indicator channel in the unicast sub-frame is the same as that in the multicast sub-frame. FIG. 29 illustrates the first OFDM symbol in the unicast sub-frame and the multicast sub-frame. The horizontal and vertical axes shown in FIG. 29 denote time and frequency axes, respectively. In FIG. 29, a resource element, which is hatched with diagonal lines, denotes the downlink control channel. A resource element assigned PCFICH denotes the control format indicator channel. For simplification of explanations, the downlink pilot channel used for channel estimation of the downlink shared data channel and the downlink control channel is not shown in FIG. 29. However, the control format indicator channel is actually allocated to a resource element other than the resource element to which the downlink pilot channel is allocated.

Four consecutive resource elements in the frequency direction, to which the control format indicator channels are allocated, are regarded as one group. Then, four resource element groups are allocated in the frequency domain at the same interval. In other words, the control format indicator channels are allocated to a total of 16 resource elements. A 32-bit sequence can be obtained by QPSK-demodulating control format indicator channels. The number of OFDM symbols forming the downlink control channels indicated by the control format indicator channels can be obtained by decoding the bit sequence. In other words, the mobile station device compares the QPSK-demodulated bit sequence to a replica of the bit sequence that the mobile station device has. Then, the mobile station device selects a replica closest to the bit sequence obtained from the control format indicator channels. Then, the mobile station device recognizes that a value of the number of OFDM symbols forming the downlink control channels, which corresponds to the selected replica, has been indicated by the control format indicator channels.

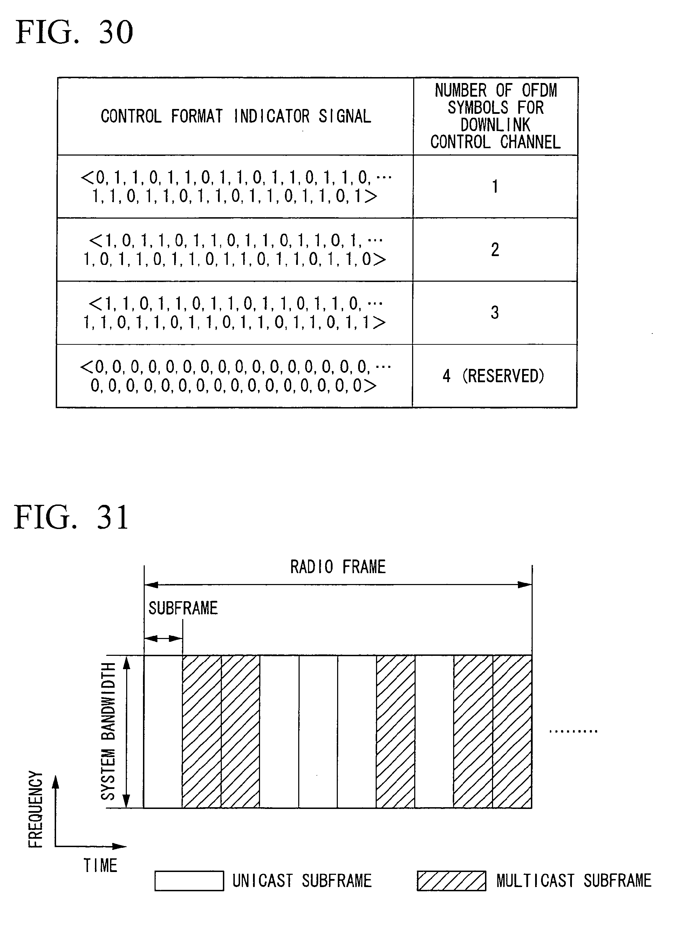

The correspondence relationship between a replica of the bit sequence and the number of OFDM symbols forming the downlink control channels is shown in FIG. 30. As shown in FIG. 30, the number of OFDM symbols forming the downlink control channels, which corresponds to a replica <0, 1, 1, 0, 1, 1, 0, 1, 1, 0, 1, 1, 0, 1, 1, 0, 1, 1, 0, 1, 1, 0, 1, 1, 0, 1, 1, 0, 1, 1, 0, 1> of the bit sequence of the control format indicator channels, is "1." The number of OFDM symbols, which corresponds to the a replica <1, 0, 1, 1, 0, 1, 1, 0, 1, 1, 0, 1, 1, 0, 1, 1, 0, 1, 1, 0, 1, 1, 0, 1, 1, 0, 1, 1, 0, 1, 1, 0>, is "2." The number of OFDM symbols, which corresponds to the a replica <1, 1, 0, 1, 1, 0, 1, 1, 0, 1, 1, 0, 1, 1, 0, 1, 1, 0, 1, 1, 0, 1, 1, 0, 1, 1, 0, 1, 1, 0, 1, 1>, is "3." The number of OFDM symbols, which corresponds to the a replica <0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0>, is "4." The number of OFDM symbols, "4" in the last case, is not being used, but is reserved.
Resource elements, to which the control format indicator channels are allocated, are determined based on the number of resource elements included in the system bandwidth and cell IDs.

### <Multicast Service>

Multimedia broadcast/multicast service (MBMS, which is broadly-defined multicast service that includes broadcast and narrowly-defined multicast, and hereinafter, the broadly-defined multicast is, if not specifically mentioned, referred to as "multicast"), in which the base station device transmits data to an unspecified number of mobile station devices, has been proposed in E-UTRA (section 15 of Non-Patent Document 2).
Additionally, single-cell transmission for one base station device to transmit data to an unspecified number of mobile station devices, and multi-cell transmission for multiple synchronized base station devices to simultaneously transmit the same data to an unspecified number of mobile station devices have been proposed as the multicast services. The multi-cell transmission has the following characteristics.

(1) An MBSFN area, in which multiple base stations are synchronized to simultaneously perform multicast (or broadcast) using the same frequency, is formed (hereinafter, referred to as "multicast area").
(2) Multiple base station devices in the multicast area simultaneously transmit the same multicast data to an unspecified number of mobile station devices.
(3) The mobile station device can combine the multicast data simultaneously transmitted from the base station devices.
(4) The multicast data is transmitted on a multicast channel in a multicast sub-frame.
(5) Each base station device transmits the multicast channel from one antenna.
The single-cell transmission has little relation to the present invention, and therefore explanations thereof are omitted here.

### <Multicast-dedicated Cell and Multicast/unicast-mixed Cell>

Regarding the base station device that performs the multi-cell transmission, there are a cell where the base station device transmits only multicast sub-frames using a multicast-dedicated frequency band (MBMS dedicated cell) and a cell where the base station device time-multiplexes the multicast sub-frame and the unicast sub-frame and performs transmission (MBMS/unicast mixed cell, hereinafter referred to as "multicast/unicast mixed cell") (section 15.2 of Non-Patent Document 2).
FIG. 31 illustrates a schematic structure of a radio frame for the multicast/unicast mixed cell where the multi-cell transmission is performed. The horizontal and vertical axes shown in FIG. 31 denote time and frequency axes. In the case of FIG. 31, the first, fourth to sixth, and eighth sub-frames are unicast sub-frames, and the remaining sub-frames are multicast sub-frames. The radio frame of the multicast/unicast mixed cell where the multi-cell transmission is performed has the following characteristics.

(1) The multicast sub-frame and the unicast sub-frame are time-multiplexed.
(2) Multicast data are transmitted on a multicast channel in a multicast sub-frame.
(3) Information data and system information are transmitted on a unicast sub-frame, the information data are transmitted on the downlink shared data channel, and the system information is transmitted on the downlink shared data channel and the broad channel.
(4) The first and sixth sub-frames in the radio frame are always unicast sub-frames, and at least the synchronization channel is transmitted thereon.
The base station device, which transmits only multicast sub-frames using the multicast-dedicated frequency band, has little relation to the present invention, and therefore explanations thereof are omitted here.

### <Multicast Sub-frame Allocation Pattern>

Regarding the base station device performing the multi-cell transmission, information on allocation of sub-frames to be reserved for multicast sub-frames, in other words, information for specifying sub-frames to which multicast sub-frames can be allocated (MSAP: MBSFN sub-frame allocation pattern, hereinafter referred to as "multicast sub-frame allocation pattern," which is also referred to by the 3GPP as "MBSC: MBSFN sub-frame configuration," "MBSFN sub-frame allocation signaling," or the like) is transmitted by system information on the downlink shared data channel (Non-Patent Document 3).

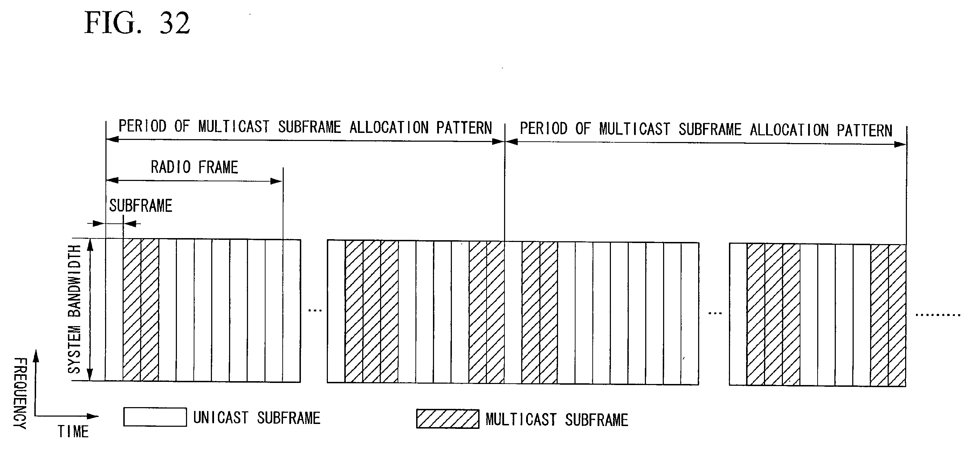

FIG. 32 illustrates a multicast sub-frame allocation pattern for the multicast/unicast mixed cell in which the multi-cell transmission is performed. The horizontal and vertical axes shown in FIG. 32 denote time and frequency axes, respectively. The multicast sub-frame allocation pattern indicates an allocation of sub-frames to be reserved for multicast sub-frames in a period. If the multicast sub-frame allocation pattern is not changed in the next period, the same sub-frames are reserved as the multicast sub-frames in the next period of the multicast sub-frame allocation pattern. A period of the multicast sub-frame allocation pattern has not been determined in E-UTRA. However, it has been determined to decide one value from 40 ms to 320 ms (from 40 sub-frames to 320 sub-frames where 1 sub-frame=1 ms)

### (Non-Patent Document 4).

For example, when a period of the multicast sub-frame allocation pattern is 80 ms (80 sub-frames), 64 bits are required to express the multicast sub-frame allocation pattern by a bit map method (which may be bits that are 16 bits less than 80 bits since the first and sixth sub-frames in the radio frame (=10 sub-frames) are fixed as the unicast sub-frames).

### <Reuse of Multicast Sub-frame Allocatable Sub-frame (MBSFN Sub-frame) as Unicast Sub-frame>

In the multicast/unicast mixed cell where multi-cell transmission is performed, when the amount of multicast data is smaller than the amount of data that can be multicast with the applied multicast sub-frame allocation pattern, such as when the base station device loses part of multicast data to be transmitted on the multicast channel, a sub-frame affected by the smaller amount of data, which is included in multicast sub-frame allocatable sub-frames specified by the multicast sub-frame allocation pattern, is not used for transmitting multicast data, but is used as the unicast sub-frame.
Additionally, a method has been considered, in which the mobile station device detects or is informed that multicast data is not transmitted on the sub-frame specified as multicast sub-frame allocatable by the multicast sub-frame allocation pattern (section 15.3.3 of Non-Patent Document 2).

### <DCI (Downlink Control Information) Format>

Multiple control data pieces are allocated to the downlink control channel. There are at least three types of control data to be allocated to the downlink control channel, which are the following.
(1) Radio resource assignment control data on the downlink shared data channel for one mobile station device (hereinafter, referred to as "downlink radio resource assignment information")
(2) Radio resource assignment control data on the uplink shared data channel for one mobile station device (hereinafter, referred to as "uplink radio resource assignment information")
(3) Control data including a set of transmit power control commands on the uplink shared data channel and the uplink control channel (hereinafter, referred to as "transmit power commands") for one mobile station device (hereinafter, referred to as "transmit power command information") (section 5.3.3. of Non-Patent Document 5).

### <DL (Downlink) Radio Resource Assignment Information>

The downlink radio resource assignment information includes at least one set of radio resource assignment information on the downlink shared data channel, a mobile station identifier, a modulation scheme, an encoding rate, and a retransmission parameter. The downlink radio resource assignment information is grouped into the following three groups according to purposes.

(1) Downlink radio resource assignment information for single input multiple output (hereinafter, "SIMO"), of which the radio resource assignment information on the downlink shared data channel (hereinafter, referred to as "downlink radio resource assignment information 1") is the smallest in size
(2) Downlink radio resource assignment information for SIMO, of which the radio resource assignment information on the downlink shared data channel is larger in size than that of the downlink radio resource assignment information 1 (hereinafter, referred to as "downlink radio resource assignment information 2")
(3) Downlink radio resource assignment information for multiple input multiple output (hereinafter, "MIMO") including two sets of modulation schemes, encoding rates, and retransmission parameters, of which the radio resource assignment information on the downlink shared data channel is the same in size as the downlink radio resource assignment information 2 (hereinafter, referred to as "downlink radio resource assignment information 3")
The bit lengths (sizes) of the three downlink radio resource assignment information pieces differ from one another. Since the downlink shared data channel is not allocated to the multicast sub-frame, the downlink radio resource assignment information is not allocated to the downlink control channel in the multicast sub-frame.

### <UL (Uplink) Radio Resource Assignment Information>

The uplink radio resource assignment information includes a mobile station identifier, uplink radio resource assignment information, a modulation scheme, an encoding rate, a retransmission parameter, and the like. When an uplink system bandwidth is equal to a downlink system bandwidth, the bit length (size) of the uplink radio resource assignment information is equal to the bit length (size) of the downlink radio resource assignment information 1.

### <Transmit Power Control (TPC)>

The transmit power command information includes a transmit power command to multiple mobile station devices and a mobile station group identifier. The bit length (size) of the transmit power command information equals that of the uplink radio resource assignment information. The transmit power command included in the transmit power command information is a transmit power command for the uplink control channel and the uplink shared data channel. A transmit power command for the uplink control channel and a transmit power command for the uplink shared data channel are not simultaneously transmitted on the same transmit power command information.

### <Coding>

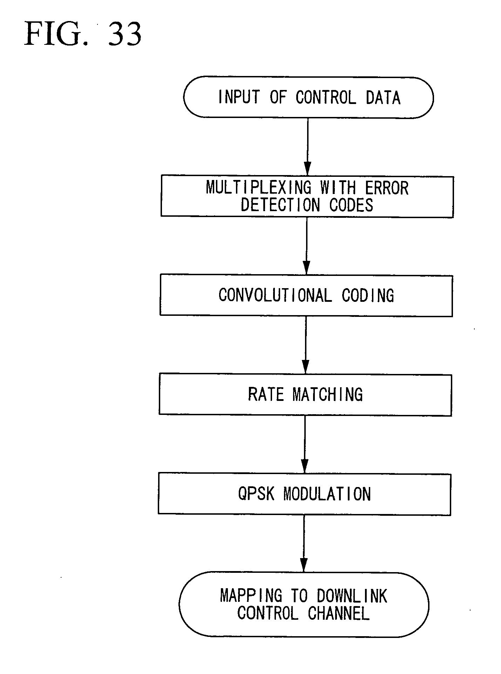

FIG. 33 is a flowchart illustrating an example procedure of coding control data to be allocated to the downlink control channel (section 5.3.3 of Non-Patent Document 5). First, control data received from the controller is multiplexed with an error detection code. The error detection code is generated from control data using a predetermined generating polynomial. Then, the control data multiplexed with the error detection code is convolutionally-coded.
Then, the convolutionally-coded control data is rate-matched, and then outputted to the QPSK (Quadrature Phase Shift Keying) modulator. The details of rate matching will be explained later.

Then, the rate-matched control data is QPSK-modulated, and then is mapped to resource elements of the downlink control channels. A combination of resource elements of the downlink control channels to which the control data are mapped is limited by the size of the QPSK-modulated control data. When the base station device transmits the downlink control channel using the transmit diversity, a transmit diversity process is performed after the QPSK modulation, and then a mapping to resource elements of the downlink control channels is performed.

### <Rate Matching>

Rate matching is to change the encoding rate by a repetition process or a puncture process on the convolutionally-coded control data in order to make the size of the convolutionally-coded control data equal to the size of the physical resource of the downlink control channel to which the control data is mapped.
As the sizes of the rate-matched control data, four sizes are considered in E-UTRA. For example, rate matching is performed so as to make the sizes equal to 36 resource elements, 72 resource elements, 144 resource elements, and 288 resource elements after the QPSK modulation is performed.

Patterns for the repetition process or the puncture process, which adjusts the different-sized control data to different-sized physical resources, differ. In other words, different rate matching patterns are used for different-sized control data, such as the downlink radio resource assignment information 2 and the uplink radio resource assignment information.
When the encoding rate is changed such that the same-sized control data before rate matching are changed to different-sized control data after the rate matching, different rate matching patterns are used.

### <Blind Decoding>

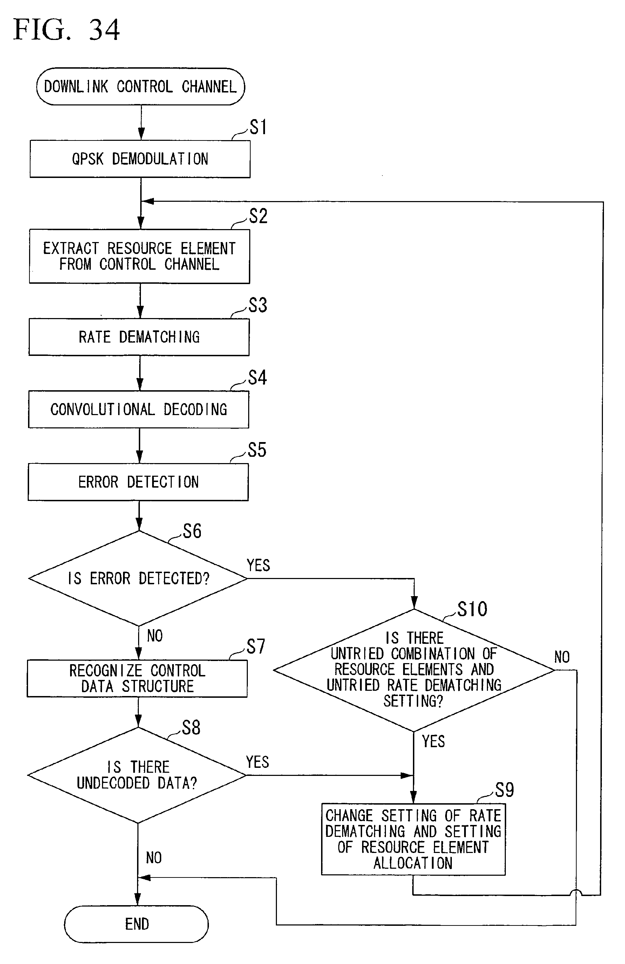

FIG. 34 is a flowchart illustrating an example procedure of decoding control data to be allocated to the downlink control channel. For each sub-frame, the mobile station device monitors whether or not control data addressed to the mobile station device is allocated to the downlink control channel. However, the mobile station device has no information about how many control data pieces addressed to the mobile station device are present, to what size of resource elements the rate matching is performed, and to which resource elements the control data pieces are mapped.

For this reason, the mobile station device first obtains the number of OFDM symbols forming the downlink control channels based on the control format indicator channels. Then, the mobile station device QPSK-demodulates all the resource elements forming the downlink control channels first (S1). Then, the mobile station device selects one possible combination of the number and allocation of resource elements to which control data are mapped (S2). Then, the mobile station device selects one of the possible sizes of the control data before rate matching, and then performs a reverse process to the rate matching (hereinafter, referred to as "rate dematching"), which is determined based on the selected size of the control data and the number of resource elements (S3).

Next, the mobile station device convolutionally-decodes the rate-dematched control data (S4), and then performs error detection using an error detection code (S5). Here, an error detection code, such that the calculation result of the error detection becomes the identifying number of the mobile station device to which the control data is addressed, is used.
If no error is detected after the convolutional decoding, in other words, if the calculation result of the error detection becomes the identifying number of the mobile station device (S6: NO), the mobile station device recognizes that the control data is the control data addressed to the mobile station device. Further, the mobile station device confirms the structure of the control data, and thereby recognizes whether the control data is the uplink radio resource assignment information, the downlink radio resource assignment information, or the transmit power command information (S7). If all pieces of the uplink radio resource assignment information, the downlink radio resource assignment information, and the transmit power command information are decoded (S8: NO), the mobile station device terminates the decoding process.

If there is undecoded control data among the uplink radio resource assignment information, the downlink radio resource assignment information, and the transmit power command information (S8: YES), the mobile station device sets an untried combination of the number and allocation of resource elements to which control data are mapped, and sets an untried size of the control data before rate matching (S9). Then, the mobile station device repeats the operations from S2 in which a resource element is extracted from the downlink control channel.

If any error is detected in the error detection process in step S5 (S6: YES), and if there are an untried combination of the number and allocation of resource elements to which the control data are mapped and an untried size of the control data before rate matching (S10: YES), the mobile station device sets these items (S9). Then, the mobile station device repeats the operations from step S2 in which a resource element is extracted from the downlink control channel.
If the control data decoding process is performed for all the combinations of the numbers and allocations of resource elements to which control data are mapped and for all the sizes of the control data before the rate matching (S10: NO), the mobile station device terminates the decoding process.
When the base station device transmits the downlink control channel using the transmit diversity, the QPSK demodulation in step S1 is performed after a transmit diversity combining process is performed.

### CITATION LIST

### Non-Patent Literature

Non-Patent Document 1: 3GPP TS36.211 V8.1.0 (2007-11), Physical Channels and Modulation (Release 8)
Non-Patent Document 2: 3GPP TS36.300 V8.3.0 (2007-12), Overall description; Stage 2 (Release 8)
Non-Patent Document 3: 3GPP TSG RAN1 #51b, Sevilla, Spain, 14-18 January, 2008, R1-080621 "Physical-layer parameters to be configured by RRC"
Non-Patent Document 4: 3GPP TSG RAN2 #61, Sorrento, Italy, 11-15 February, 2008, R2-080708 "LS response on Signaling of MBSFN Sub-frame Allocation"
Non-Patent Document 5: 3GPP TS36.212 V8.1.0 (2007-11), Multiplexing and channel coding (Release 8)

### DISCLOSURE OF THE INVENTION

### Problems to be Solved by the Invention

Regarding the aforementioned E-UTRA, however, in the multicast/unicast mixed cell in which multi-cell transmission is performed, the mobile station device has to detect an item that is not allocated to the downlink control channel in the multicast sub-frame, such as the downlink radio resource assignment information, for all the sub-frames indicated as multicast sub-frame allocatable by the multicast sub-frame allocation pattern, thereby causing a problem in which there is a heavy processing load on the mobile station device.
For this reason, a method can be considered in which new control data for the base station device to inform the mobile station device that the multicast sub-frame is used as the unicast sub-frame at a shorter interval than the transmission period of the multicast sub-frame allocation pattern. However, this method causes an increase in overhead of control data, thereby causing a decrease in the transmission efficiency.

The present invention is made in consideration of such situations. An object of the present invention is to provide a wireless communication system, a base station device, a mobile station device, a wireless reception method, and a wireless transmission method, which can determine the type of sub-frames without causing a decrease in the transmission efficiency, and which can reduce the number of downlink control channel decoding processes.

### Means for Solving the Problems

(1) The present invention is made to solve the above problems. A wireless communication system of the present invention includes: a base station device that time-multiplexes a first-type sub-frame to which first-type data is allocated and a second-type sub-frame to which second-type data is allocated; and a plurality of mobile station devices, each of which receives a signal addressed to each of the plurality of mobile station devices from sub-frames transmitted by the base station device. The base station device includes: a radio resource controller that determines a type of each of the sub-frames; a first-type control signal generator that generates a first-type control signal including items according to whether the sub-frame to be allocated is a first-type sub-frame or a second type-sub-frame; a second-type control signal generator that generates a second-type control signal that is allocated to a predetermined region of each of the sub-frames, the second-type control signal indicating a region in the sub-frame to be allocated, the first-type control signal being allocated to the region, the second-type control signal further indicating, in addition to the region, a type of the sub-frame to be allocated when the sub-frame to be allocated is specified as a sub-frame to which the first-type sub-frame is allocatable by first-type sub-frame candidate information that specifies a sub-frame to which the first-type sub-frame is allocatable, the first-type sub-frame candidate information being previously stored; a multiplexer that multiplexes the first-type sub-frame and the second-type sub-frame to which the first-type control signal and the second-type control signal are allocated, respectively, according to the type of each of the sub-frames; and a transmitter that transmits a signal resulting from the multiplexing by the multiplexer. Each of the plurality of mobile station devices includes: a receiver that receives a signal transmitted from the base station device; a frame-type determining unit that determines a type of a sub-frame of the signal received by the receiver, based on the first-type sub-frame candidate information previously stored and the second-type control signal of the sub-frame; and a first-type control signal detector that detects, from the sub-frame of the signal received by the receiver, the first-type control signal including items corresponding to the type indicated by a result of the determination by the frame-type determining unit.

(2) Regarding the wireless communication system of the present invention, the first-type data is broadcast data or multicast data which is addressed to the plurality of mobile station devices, and the second-type data is unicast data addressed to one of the plurality of mobile station devices.

(3) Regarding the wireless communication system of the present invention, the base station device previously stores the first-type sub-frame candidate information, the receiver of each of the plurality of mobile station devices previously receives the first-type sub-frame candidate information transmitted, and the first-type sub-frame candidate information used for the determination by the frame-type determining unit of each of the mobile station devices is the first-type sub-frame candidate information received by the receiver.

(4) Regarding the wireless communication system of the present invention, any one of the region to which the first-type control signal indicated by the second-type control signal is allocated and the type of the sub-frame differs according to other conditions that are previously-determined, regardless of a value indicated by the second control signal.

(5) Regarding the wireless communication system of the present invention, the other conditions comprise the number of transmit antennas used for the base station device to transmit the first-type control signal.

(6) Regarding the wireless communication system of the present invention, the other conditions comprise whether or not a sub-frame to which the second-type control signal is allocated is specified as the sub-frame to which the first-type sub-frame is allocatable by the first-type sub-frame candidate information.

(7) Regarding the wireless communication system of the present invention, the first-type control signal detector uses a size of data corresponding to the items upon detecting the first control signal including the items corresponding to the type indicated by the result of the determination by the frame-type determining unit.

(8) Regarding the wireless communication system of the present invention, the items corresponding to the type indicated by the result of the determination by the frame-type determining unit are uplink radio resource assignment information and uplink transmit power command information when the type indicated by the result of the determination is the first-type sub-frame.

(9) Regarding the wireless communication system of the present invention, the items corresponding to the type indicated by the result of the determination by the frame-type determining unit includes at least downlink radio resource assignment information when the type indicated by the result of the determination is the second-type sub-frame.

(10) Regarding the wireless communication system of the present invention, the items corresponding to the type indicated by the result of the determination by the frame-type determining unit further includes uplink radio resource assignment information and uplink transmit power command information when the type indicated by the result of the determination is the second-type sub-frame.

(11) A base station device of the present invention time-multiplexes a first-type sub-frame to which first-type data is allocated and a second-type sub-frame to which second-type data is allocated. The base station device includes: a radio resource controller that determines a type of each of sub-frames; a first-type control signal generator that generates a first-type control signal including items according to the type of the sub-frame to be allocated; a second-type control signal generator that generates a second-type control signal that is allocated to a predetermined region of each of the sub-frames, the second-type control signal indicating a region in the sub-frame to be allocated, the first-type control signal being allocated to the region, the second-type control signal further indicating, in addition to the region, a type of the sub-frame to be allocated when the sub-frame to be allocated is specified as a sub-frame to which the first-type sub-frame is allocatable by first-type sub-frame candidate information that specifies a sub-frame to which the first-type sub-frame is allocatable, the first-type sub-frame candidate information being previously stored; a multiplexer that multiplexes the first-type sub-frame and the second-type sub-frame to which the first-type control signal and the second-type control signal are allocated, respectively, according to the type of each of the sub-frames determined by the radio resource controller; and a transmitter that transmits a signal resulting from the multiplexing by the multiplexer.

(12) A mobile station device of the present invention receives a signal in which a first-type sub-frame to which first-type data is allocated and a second-type sub-frame to which second-type data is allocated are time-multiplexed. The mobile station device includes: a receiver that receives the signal time-multiplexed; a frame-type determining unit that determines a type of a sub-frame of the signal received by the receiver, based on first-type sub-frame candidate information and a second-type control signal of the sub-frame, the first-type sub-frame candidate information being previously stored, the first-type sub-frame candidate information being information specifying a sub-frame to which the first-type sub-frame is allocatable, the second-type control signal being allocated to a predetermined region of the sub-frame, the second-type control signal indicating a region in the sub-frame to be allocated, the first-type control signal including items corresponding to the type of the sub-frame to be allocated being allocated to the region, the second-type control signal further indicating a type of the sub-frame when the sub-frame is specified as a sub-frame to which the first-type sub-frame is allocatable by first-type sub-frame candidate information; and a first-type control signal detector that detects, from the sub-frame of the signal received by the receiver, the first-type control signal including items corresponding to the type indicated by a result of the determination by the frame-type determining unit.

(13) A radio transmission method of the present invention is provided for a base station device that time-multiplexes a first-type sub-frame to which first-type data is allocated and a second-type sub-frame to which second-type data is allocated. The radio transmission method includes: a first step of the base station device determining a type of each of sub-frames; a second step of the base station device generating a first-type control signal including items according to the type of the sub-frame to be allocated; a third step of the base station device generating a second-type control signal that is allocated to a predetermined region of each of the sub-frames, the second-type control signal indicating a region in the sub-frame to be allocated, the first-type control signal being allocated to the region, the second-type control signal further indicating, in addition to the region, a type of the sub-frame to be allocated when the sub-frame to be allocated is specified as a sub-frame to which the first-type sub-frame is allocatable by first-type sub-frame candidate information that specifies a sub-frame to which the first-type sub-frame is allocatable, the first-type sub-frame candidate information being previously stored; a fourth step of the base station device multiplexing the first-type sub-frame and the second-type sub-frame to which the first-type control signal and the second-type control signal are allocated, respectively, according to the type of each of the sub-frames determined in the first step; and a fifth step of the base station device transmitting a signal resulting from the multiplexing in the fourth step.

(14) A radio transmission method of the present invention is provided for a mobile station device that receives a signal in which a first-type sub-frame to which first-type data is allocated and a second-type sub-frame to which second-type data is allocated are time-multiplexed. The radio transmission method includes: a first step of the mobile station device receiving the signal time-multiplexed; a second step of the mobile station device determining a type of a sub-frame of the signal received in the first step, based on first-type sub-frame candidate information and a second-type control signal of the sub-frame, the first-type sub-frame candidate information being previously stored, the first-type sub-frame candidate information being information specifying a sub-frame to which the first-type sub-frame is allocatable, the second-type control signal being allocated to a predetermined region of the sub-frame, the second-type control signal indicating a region in the sub-frame to be allocated, the first-type control signal including items corresponding to the type of the sub-frame to be allocated being allocated to the region, the second-type control signal further indicating a type of the sub-frame when the sub-frame is specified as a sub-frame to which the first-type sub-frame is allocatable by first-type sub-frame candidate information; and a third step of the mobile station device detecting, from the sub-frame of the signal received in the first step, the first-type control signal including items corresponding to the type indicated by a result of the determination in the second step.

### Effects of the Invention

According to the present invention, in the sub-frame specified as the first-type sub-frame allocatable by the first-type sub-frame candidate information, the second-type control signal indicates a region to which the first-type control signal is allocated, and the type of sub-frames. The mobile station device detects the first-type control signal including the item corresponding to the type. Accordingly, the mobile station device can determine the type of sub-frames without causing a decrease in the transmission efficiency, thereby enabling a reduction in the number of first-type control signal decoding processes.

### BRIEF DESCRIPTION OF THE DRAWINGS

FIG. 1 illustrates a schematic structure of a downlink radio frame from the base station device 1 to the mobile station device 2 according to an embodiment of the present invention.
FIG. 2 illustrates a schematic structure of a unicast sub-frame according to the present embodiment.
FIG. 3 illustrates allocation of downlink pilot channels when the base station device 1 of the present embodiment transmits a unicast sub-frame signal using four transmit antennas.
FIG. 4 illustrates a schematic structure of a multicast sub-frame according to the present embodiment.
FIG. 5 illustrates allocation of downlink pilot channels when the base station device 1 of the present embodiment transmits a multicast sub-frame signal using five transmit antennas.
FIG. 6 illustrates allocation of physical control format indicator channels indicating the size of downlink control channels according to the present embodiment.
FIG 7 illustrates a multicast sub-frame allocation pattern according to the present embodiment.
FIG 8 is a schematic block diagram illustrating the configuration of the base station device 1 according to the present embodiment.
FIG. 9 is a schematic block diagram illustrating the internal configuration of the transmission processor 13 of the base station device 1 according to the present embodiment.
FIG. 10 is a block diagram illustrating an internal configuration of the encoder 331 of the downlink control channel processor 33 according to the present embodiment.
FIG. 11 is a flowchart illustrating control performed by the control format indicator signal generator 35 included in the controller 11 of the base station device 1 when the base station device 1 transmits unicast sub-frame signals from one or two transmit antennas according to the present embodiment.
FIG. 12 is a table indicating the relationship between a bit sequence indicated by the control format indicator signal, the type of sub-frame, and the number of OFDM symbols to which the downlink control channels are allocated, regarding the control method shown in FIG. 11 according to the present embodiment.
FIG. 13 is a flowchart illustrating control performed by the control format indicator signal generator 35 included in the controller 11 of the base station device 1 when the base station device 1 transmits unicast sub-frame signals from four transmit antennas according to the present embodiment.
FIG. 14 is a table indicating the relationship between a bit sequence indicated by the control format indicator signal, the sub-frame structure, and the number of OFDM symbols to which the downlink control channels are allocated, regarding the control method shown in FIG. 13 according to the present embodiment.
FIG. 15 is a table indicating the relationship between a bit sequence indicated by the control format indicator signal, the sub-frame structure, and the number of OFDM symbols to which the downlink control channels are allocated, the table being stored in the mobile station device 2 according to the present embodiment.
FIG. 16 is a modified example of the table shown in FIG. 12 according to the present embodiment, which indicates the relationship between a bit sequence indicated by the control format indicator signal, the sub-frame structure, and the number of OFDM symbols to which the downlink control channels are allocated.
FIG. 17 is a modified example of the table shown in FIG. 14 according to the present embodiment, which indicates the relationship between a bit sequence indicated by the control format indicator signal, the sub-frame structure, and the number of OFDM symbols to which the downlink control channels are allocated.
FIG. 18 is a chart indicating the relationship among the bit sequence indicated by the control format indicator signal, the sub-frame type, and the number of OFDM symbols to which the downlink control channels are allocated when an unused control format indicator signal is used according to the present embodiment.
FIG. 19 is a schematic block diagram illustrating the configuration of the mobile station device 2 according to the present embodiment.
FIG. 20 is a schematic block diagram illustrating the internal configuration of the reception processor 22 of the mobile station device 2 according to the present embodiment.
FIG. 21 is a schematic block diagram illustrating the internal configuration of the decoder 231 of the mobile station device 2 according to the present embodiment.
FIG. 22 is a flowchart illustrating an example operation of the signal determining unit 211 of the mobile station device 2 according to the present embodiment.
FIG. 23 is a flowchart illustrating an example operation of the rate dematching unit of the mobile station device 2 according to the present embodiment.
FIG. 24 illustrates a schematic structure of channels in conventional E-UTRA.
FIG. 25 illustrates a schematic structure of a radio frame in a conventional E-UTRA downlink.
FIG. 26 illustrates allocation of the downlink pilot channels included in one PRB pair in a unicast sub-frame in the conventional E-UTRA downlink.
FIG. 27 illustrates a schematic structure of a multicast sub-frame in the conventional E-UTRA downlink.
FIG. 28 illustrates allocation of downlink pilot channels included in one PRB pair in a multicast sub-frame in the conventional E-UTRA downlink.
FIG. 29 illustrates allocation of physical control format indicator channels indicating the size of control channels in the conventional E-UTRA downlink.
FIG. 30 illustrates the relationship between a bit sequence indicated by the control format indicator signal and the number of OFDM symbols to which the downlink control channels are allocated in the conventional E-UTRA.
FIG. 31 illustrates a schematic structure of a radio frame for a multicast/unicast mixed cell where multi-cell transmission is performed in the conventional E-UTRA.
FIG. 32 illustrates a multicast sub-frame allocation pattern for a multicast/unicast mixed cell in which multi-cell transmission is performed in the conventional E-UTRA.
FIG. 33 is a flowchart illustrating an example procedure of coding control data to be allocated to a downlink control channel in the conventional E-UTRA.
FIG. 34 is a flowchart illustrating an example procedure of decoding control data to be allocated to a downlink control channel in the conventional E-UTRA.

### BEST MODE FOR CARRYING OUT THE INVENTION

Hereinafter, an embodiment of the present invention is explained with reference to the drawings. A wireless communication system according to the present embodiment includes multiple base station devices 1, and multiple mobile station devices 2 receiving signals transmitted from the base station devices 1. The schematic configuration of the wireless communication system according to the present embodiment is the same as shown in FIG. 24.
A downlink from the base station device 1 to the mobile station device 2 includes a downlink pilot channel, a downlink synchronization channel, a broadcast channel, a downlink control channel, a downlink shared data channel, a control format indicator channel, a downlink HARQ (Hybrid Automatic Repeat reQuest) indicator channel, and a multicast channel.
An uplink from the mobile station device 2 to the base station device 1 includes an uplink pilot channel, a random access channel, an uplink control channel, and an uplink shared data channel.

### <Radio Frame>

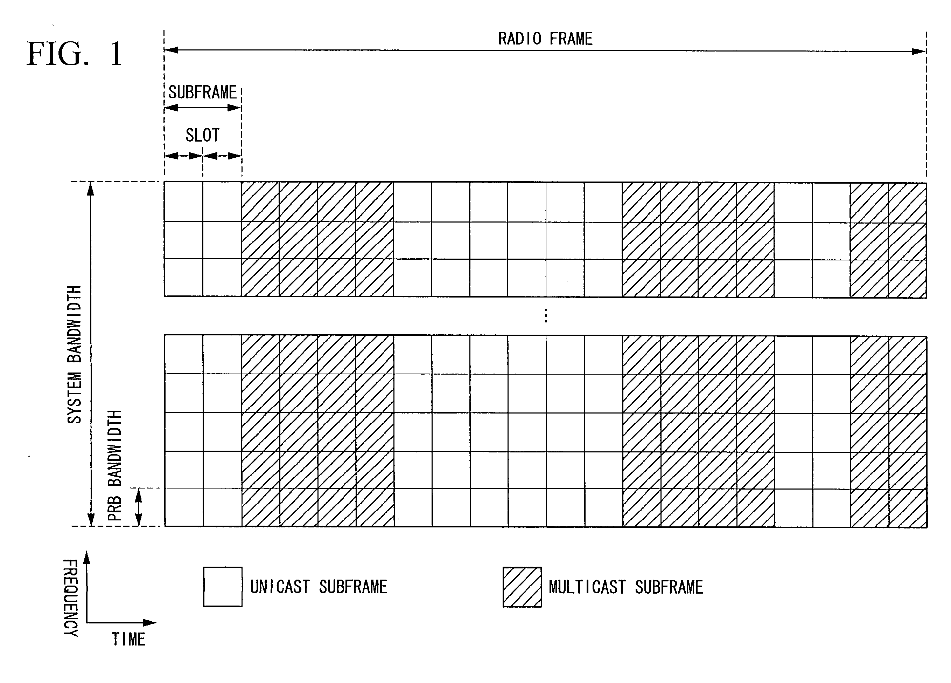

FIG. 1 illustrates a schematic structure of a downlink radio frame (radio resource) from the base station device 1 to the mobile station device 2 according to the present embodiment. The horizontal and vertical axes shown in FIG. 1 denote time and frequency axes, respectively. The downlink radio frame includes PRB (Physical Resource Block) pairs. The PRB pair is a unit of radio resource assignment or the like for localized transmission and is defined by a frequency band (PRB bandwidth) and a time band (sub-frame) which have predetermined widths. Basically, one PRB pair includes two consecutive PRBs (PRB bandwidth×slot) in the time domain.

A system bandwidth is a communication bandwidth of the base station device 1. Multiple PRBs according to the system bandwidth are allocated in the downlink radio frame. In the time domain, a sub-frame (time frame) includes two slots, and a radio frame includes 10 sub-frames. Additionally, a multicast sub-frame (MBSFN: Multicast/Broadcast over Single Frequency Network sub-frame, first-type time-frame) to which multicast channels are allocated, and a unicast sub-frame (second-type time-frame) to which the downlink shared data channels are allocated are time-multiplexed. Here, the multicast channel is used for transmitting multicast data (broadly-defined multicast data, MBMS (Multimedia Broadcast/Multicast Service) data (first-type data), which is a collective term indicating broadcast data or multicast data (narrowly-defined multicast data) addressed to multiple mobile station devices. The downlink shared data channel is used for transmitting unicast data (second-type data) addressed to one mobile station device 2, such as information data and system information. Hereinafter, simply-called multicast data indicates the broadly-defined multicast data.

### <Unicast Sub-frame>

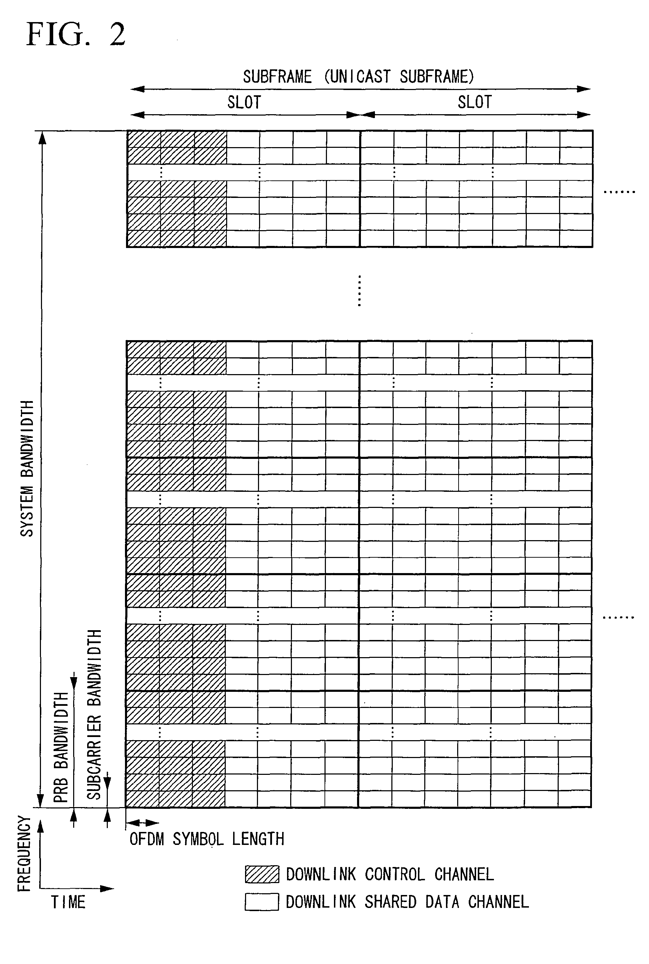

FIG. 2 illustrates a schematic structure of a unicast sub-frame of the present embodiment. The horizontal and vertical axes shown in FIG. 2 denote time and frequency axes, respectively. In the unicast sub-frame, one PRB includes 12 sub-carriers in the frequency domain and 7 OFDM symbols in the time domain. A sub-frame includes two slots.

At least the downlink shared data channel for transmitting information data and system information and the downlink control channel for transmitting control data are allocated in each unicast sub-frame. The downlink pilot channel for channel estimation of the downlink shared data channel and the downlink control channel is not illustrated in FIG. 2. FIG. 2 shows a case where the downlink control channels are allocated to the first, second, and third OFDM symbols in the sub-frame which are expressed by rectangles hatched with diagonal lines, and the downlink shared data channels are allocated to other OFDM symbols expressed by non-hatched rectangles. The number of OFDM symbols to which the downlink control channels are allocated varies in units of sub-frames.

Although not shown in FIG. 2, the control format indicator channel is allocated to a predetermined frequency position of the first OFDM symbol. Information, which indicates the number of OFDM symbols forming the downlink control channels, is allocated to the control format indicator channel. The downlink control channel is allocated to only the first OFDM symbol in one case, to the first and second OFDM symbols in another case, to the first to third OFDM symbols in another case, or the like.

Similarly, although not shown in FIG. 2, the downlink HARQ indicator channel is allocated to an OFDM symbol to which the downlink control channel is allocated. In other words, the downlink HARQ indicator channel is frequency-multiplexed with the downlink control channel. The downlink control channel and the downlink shared data channel are not allocated to the same OFDM symbol. Multiple pieces of uplink radio resource assignment information, the downlink radio resource assignment information, and transmit power command information are allocated to the downlink control channel.

### <Pilot Channel of Unicast Sub-frame>

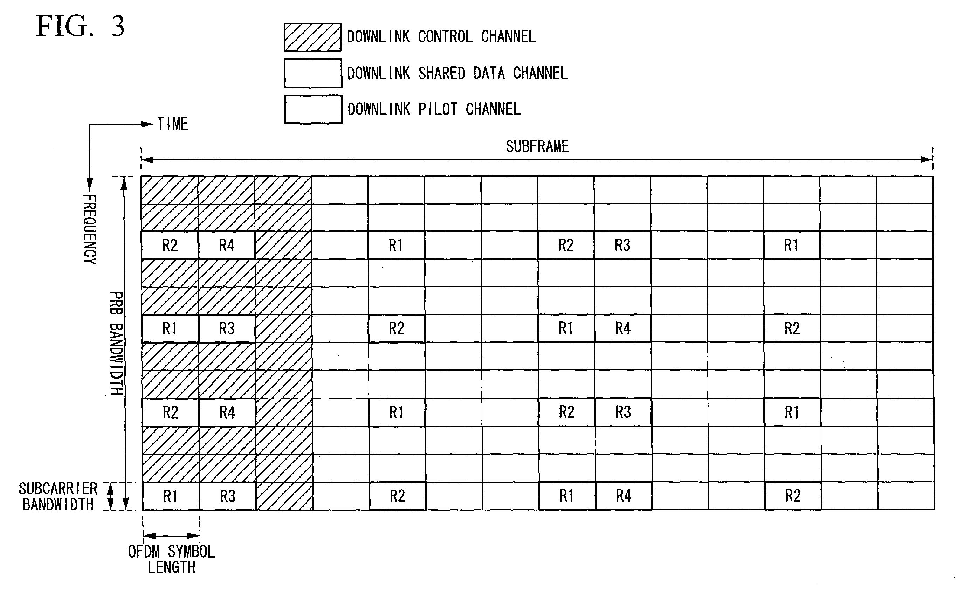

FIG. 3 illustrates allocation of the downlink pilot channels included in a PRB pair in a unicast sub-frame when the base station device 1 transmits a unicast sub-frame signal using four transmit antennas. The horizontal and vertical axes shown in FIG. 3 denote time and frequency axes, respectively. A resource element assigned reference numeral R1 denotes a resource element of the downlink pilot channel to be transmitted from the transmit antenna 1. A resource element assigned reference numeral R2 denotes a resource element of the downlink pilot channel to be transmitted from the transmit antenna 2. A resource element assigned reference numeral R3 denotes a resource element of the downlink pilot channel to be transmitted from the transmit antenna 3. A resource element assigned reference numeral R4 denotes a resource element of the downlink pilot channel to be transmitted from the transmit antenna 4.

When the base station device 1 has only two transmit antennas, the downlink control channels are transmitted on the resource elements R3 and R4 in the second OFDM symbol. The downlink shared data channels are transmitted on the resource elements R3 and R4 in the ninth OFDM symbol.

### <Multicast Sub-frame>

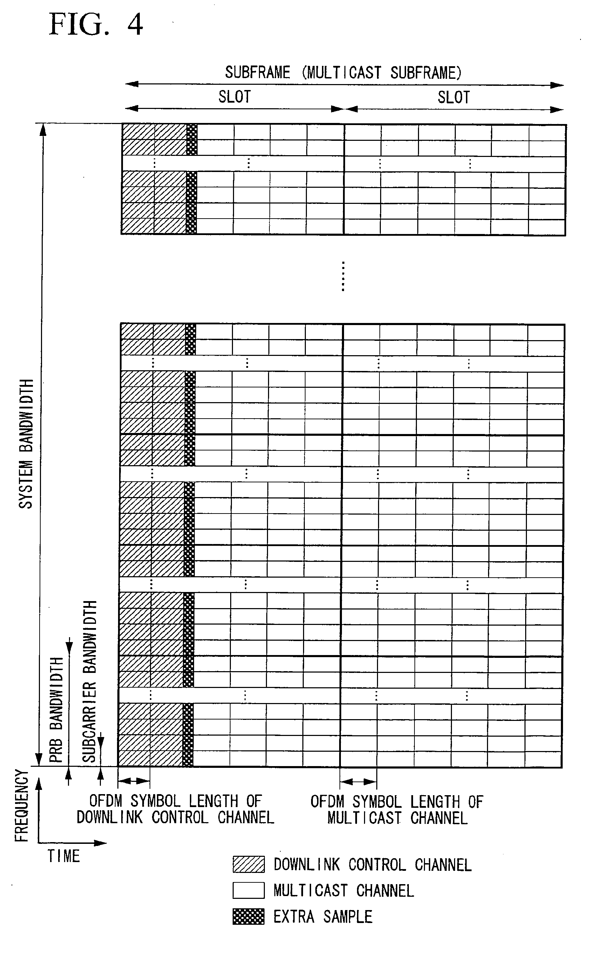

FIG. 4 illustrates a schematic structure of a multicast sub-frame of the present embodiment. The horizontal and vertical axes shown in FIG. 4 denote time and frequency axes, respectively. One PRB in the multicast sub-frame includes 12 subcarriers in the frequency domain and 6 OFDM symbols in the time domain. In the time domain, a slot includes 6 OFDM symbols, and a sub-frame includes 2 slots.

At least the multicast channels for transmitting multicast data are allocated to each multicast sub-frame. The downlink pilot channel used for channel estimation of the multicast channel and the downlink control channel is not shown in FIG. 4, and allocation thereof will be explained later. FIG. 4 shows a case where the downlink control channels are allocated to the first and second OFDM symbols in the sub-frame which are expressed by hatched rectangles, and the multicast channels are allocated to other OFDM symbols expressed by non-hatched rectangles. The number of OFDM symbols, to which the downlink control channels are allocated, varies in units of sub-frames.

The number of OFDM symbols included in the multicast sub-frame is smaller than that of OFDM symbols included in the unicast sub-frame. However, the length of the OFDM symbol to which the multicast channels are allocated is longer than the length of an OFDM symbol in the unicast sub-frame. Consequently, the time length of a slot of the multicast frame equals that of a slot of the unicast frame. However, the length of the OFDM symbol in the multicast sub-frame, to which the downlink control channels are allocated, is equal to the length of the OFDM symbol in the unicast sub-frame, to which the downlink control channels are allocated. To make the time length of the multicast sub-frame equal to that of the unicast sub-frame, extra samples are allocated in the multicast sub-frame between the OFDM symbols for the downlink control channels and the OFDM symbols for the multicast channels.

Although not shown in FIG. 4, the control format indicator channel, which indicates the number of OFDM symbols forming the downlink control channels, is allocated to a predetermined frequency position of the first OFDM symbol. The downlink control channel is allocated to the first OFDM symbol in one case, to the first and second OFDM symbols in another case, or the like. Similarly, although not shown in FIG. 4, the downlink HARQ indicator channel is allocated to an OFDM symbol to which the downlink control channels are allocated. In other words, the downlink HARQ indicator channel is frequency-multiplexed with the downlink control channel. The downlink control channel and the multicast channel are not allocated to the same OFDM symbol. Multiple pieces of uplink radio resource assignment information and transmit power command information are allocated to the downlink control channel.

### <Pilot Channel in Multicast Sub-frame>

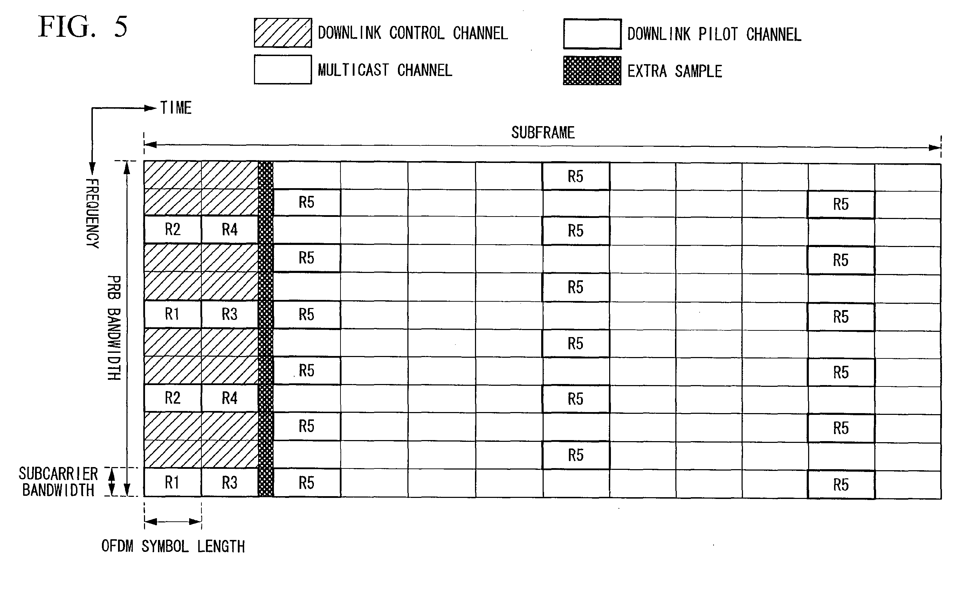

FIG. 5 illustrates allocation of the downlink pilot channels included in a PRB pair in a multicast sub-frame when the base station device 1 transmits a multicast sub-frame signal using five transmit antennas. The horizontal and vertical axes shown in FIG. 5 denote time and frequency axes, respectively. A resource element assigned reference numeral R1 denotes a resource element of the downlink pilot channel to be transmitted from the transmit antenna 1. A resource element assigned reference numeral R2 denotes a resource element of the downlink pilot channel to be transmitted from the transmit antenna 2. A resource element assigned reference numeral R3 denotes a resource element of the downlink pilot channel to be transmitted from the transmit antenna 3. A resource element assigned reference numeral R4 denotes a resource element of the downlink pilot channel to be transmitted from the transmit antenna 4. A resource element assigned reference numeral R5 denotes a resource element of the downlink pilot channel to be transmitted from the transmit antenna 5.

In the case of FIG. 5, the downlink control channels are allocated to the first and second OFDM symbols. The downlink control channels, to which R1 and R2 are assigned, are allocated to the first OFDM symbol. The downlink control channels, to which R3 and R4 are assigned, are allocated to the second OFDM symbol. When the base station device 1 has five transmit antennas and transmits downlink control channel signals on the unicast sub-frame and the multicast sub-frame using four transmit antennas, the downlink pilot channels allocated to the resource elements R1, R2, R3, and R4 are necessary to perform channel compensation on the downlink channels. For this reason, the downlink control channels in the multicast sub-frame are always allocated to both first and second OFDM symbols.

### <Control Format Indicator Channel>

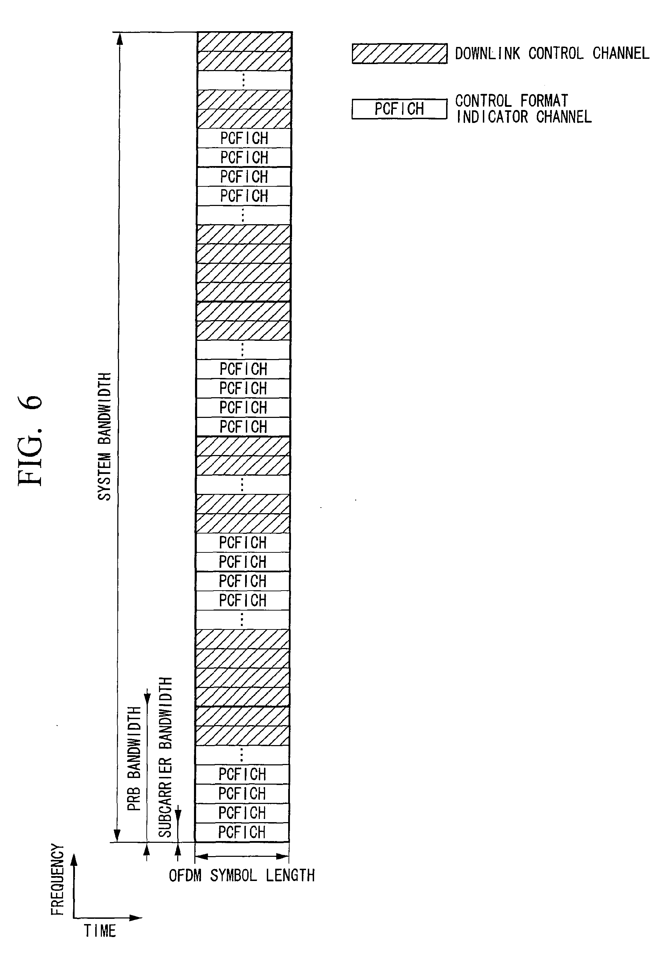

FIG. 6 illustrates allocation of PCFICH (Physical Control Format Indicator Channel) indicating the size of downlink control channels. Allocation of control format indicator channel in the unicast sub-frame is the same as that in the multicast sub-frame. FIG. 6 illustrates the first OFDM symbol in the unicast sub-frame and the multicast sub-frame. The horizontal and vertical axes shown in FIG. 6 denote time and frequency axes, respectively. A resource element, which is hatched with diagonal lines, denotes the downlink control channel. A resource element assigned PCFICH denotes the control format indicator channel. For simplification of explanations, the downlink pilot channel used for channel estimation of the downlink shared data channel and the downlink control channel is not shown in FIG. 6. In fact, however, the control format indicator channel is allocated to a resource element other than the resource element to which the downlink pilot channel is allocated.

Four consecutive resource elements in the frequency direction, to which the control format indicator channel is allocated, are regarded as one group. Then, four resource element groups are allocated at the same interval. In other words, the control format indicator channel is allocated to a total of 16 resource elements. In the present embodiment, a signal, which is allocated to the control format indicator channel, will be explained later. Resource elements, to which the control format indicator channel is allocated, are determined based on the number of resource elements included in the system bandwidth and cell IDs.

### <Multicast Sub-frame Allocation Pattern (MBSFN Sub-frame Allocation Pattern)>

Regarding the base station device 1, information for specifying sub-frames to which multicast sub-frames can be allocated (MBSFN sub-frame allocation pattern, hereinafter referred to as "multicast sub-frame allocation pattern," which is also referred to as "MBSC: MBSFN sub-frame configuration," "MBSFN sub-frame allocation signaling," or the like) is transmitted by system information on the downlink shared data channel.

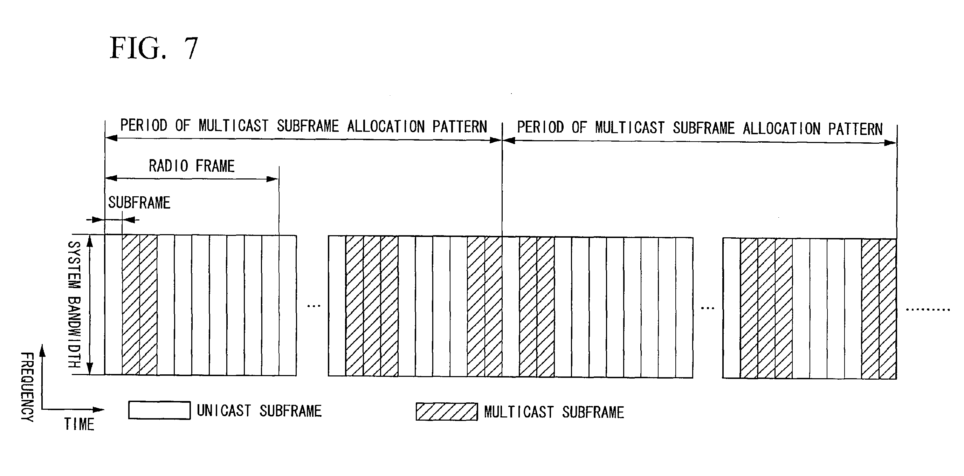

FIG. 7 illustrates a multicast sub-frame allocation pattern. The horizontal and vertical axes shown in FIG. 7 denote time and frequency axes, respectively. The multicast sub-frame allocation pattern indicates an allocation to which multicast sub-frames are allocatable in a period. If the multicast sub-frame allocation pattern is not changed in the next period, the same sub-frames are reserved as the multicast sub-frames in the next period of the multicast sub-frame allocation pattern. A period of the multicast sub-frame allocation pattern is 80 ms. 64 bits are required for displaying the multicast sub-frame allocation pattern by the bitmap method (which may be bits that are 16 bits less than 80 bits since the first and sixth sub-frames in the radio frame).

### <Reuse of Multicast Sub-frame Allocatable Sub-frame (MBSFN Sub-frame) as Unicast Sub-frame>

When the amount of multicast data that the base station device 1 holds is smaller than the amount of data that can be multicast with the applied multicast sub-frame allocation pattern, such as when the base station device 1 loses part of multicast data to be transmitted on the multicast channel, a sub-frame affected by the smaller amount of data, which is included in sub-frames specified as multicast sub-frame allocatable by the multicast sub-frame allocation pattern, which is a sub-frame in which the base station device 1 does not hold multicast data to be transmitted, is not used for transmitting multicast data, but is used as the unicast sub-frame.

### <DCI (Downlink Control Information) Format>

Multiple control data pieces are allocated to the downlink control channel. There are at least three types of control data pieces to be allocated to the downlink control channel, which are the following.
(1) Radio resource assignment control data on the downlink shared data channel for one mobile station device (hereinafter, referred to as "downlink radio resource assignment information")
(2) Radio resource assignment control data on the uplink shared data channel for one mobile station device (hereinafter, referred to as "uplink radio resource assignment information")
(3) Control data including a set of transmit power control commands on the uplink shared data channel and the uplink control channel (hereinafter, referred to as "transmit power commands") for one mobile station device (hereinafter, referred to as "transmit power command information").
The aforementioned three types of control data pieces (the downlink radio resource assignment information, the uplink radio resource assignment information, and the transmit power command information) are allocated to the downlink control channel in the unicast sub-frame. However, two of the aforementioned three items, which are the uplink radio resource assignment information and the transmit power command information, are allocated to the downlink control channel in the multicast sub-frame.

### <Coding>

Hereinafter, a procedure of coding control data to be allocated to the downlink control channel is explained. First, control data is multiplexed with an error detection code. The error detection code is generated from control data using a predetermined generating polynomial. Then, the control data multiplexed with the error detection code is convolutionally-coded. Then, the convolutionally-coded control data is rate-matched, and then QPSK-modulated. Then, the QPSK-modulated control data is mapped to resource elements of the downlink control channels. A combination of resource elements of the downlink control channels to which the control data are mapped is limited by the size of the QPSK-modulated control data. When the base station device 1 transmits the downlink control channels using the transmit diversity, a transmit diversity process is performed after the QPSK modulation, and then a mapping to resource elements of the downlink control channels is performed. Although it has been assumed in the present embodiment that the QPSK modulation (Quadrature Phase Shift Keying modulation) is used, another modulation scheme may be used.

### <Rate Matching>

Rate matching is to change the encoding rate by a repetition process or a puncture process on the convolutionally-coded control data in order to make the size of the convolutionally-coded control data equal to the size of the physical resource of the downlink control channel to which the control data is mapped. As the sizes of the rate-matched control data, four sizes can be selected in the present embodiment. The four sizes are 36 resource elements, 72 resource elements, 144 resource elements, and 288 resource elements, which are 72 bits, 144 bits, 288 bits, and 576 bits, respectively, after the QPSK modulation is performed.

Patterns for the repetition process or the puncture process, which adjusts the different-sized control data to different-sized physical resources, differ. In other words, different rate matching patterns are used for different-sized control data, such as the downlink radio resource assignment information and the uplink radio resource assignment information. When the encoding rate is changed such that the same-sized control data before rate matching are changed to different-sized control data after the rate matching, different rate matching patterns are used.

### <Base Station Device 1>

The base station device 1 of the present embodiment includes, in system information to be allocated to the downlink shared data channel, a multicast sub-frame allocation pattern (first-type time frame candidate information) which is received from an external unit, and which is information specifying sub-frames to which multicast sub-frames (first-type time frames) can be allocated. Then, the base station device 1 transmits the system information. When there is no multicast data (first-type data) to be allocated to the sub-frames specified as multicast sub-frame allocatable by the multicast sub-frame allocation pattern, such as when part of multicast data is lost due to delay of communication with another device, the base station device 1 uses the sub-frame as a unicast sub-frame (second-type time frame), allocates information data (second-type data) to the unicast sub-frame, and performs transmission. In this case, a bit sequence, which is different from the bit sequence used for the multicast sub-frame, is assigned to the unicast sub-frame control format indicator channel (second-type control signal), thus indicating that the sub-frame is the unicast sub-frame.

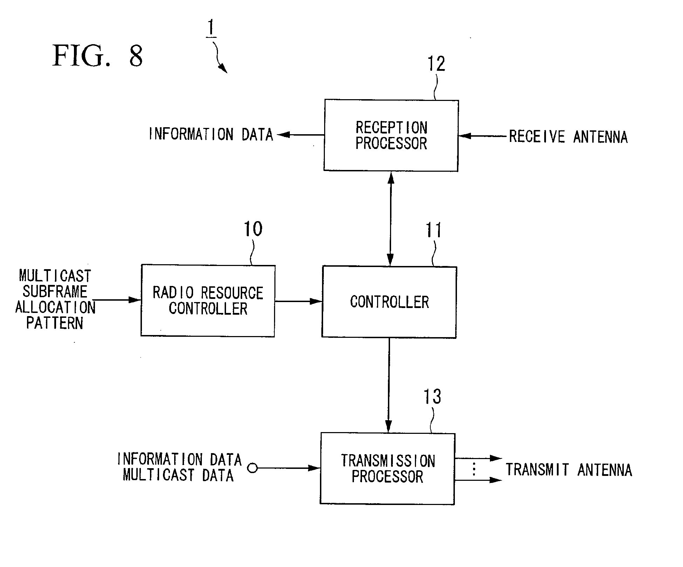

FIG. 8 is a schematic block diagram illustrating the configuration of the base station device 1 according to the present embodiment of the present invention. As shown in FIG. 8, the base station device 1 includes a radio resource controller 10, a controller 11, a reception processor 12, and a transmission processor 13. The radio resource controller 10 receives a multicast sub-frame allocation pattern from an external unit and stores the pattern. Further, the radio resource controller 10 manages a discontinuous transmission and reception cycle with the mobile station device 2, a modulation scheme, an encoding rate, a transmit power, radio resource assignment of the downlink shared data channels, allocation of multicast sub-frames and unicast sub-frames, which is determination of the type of each time frame, the number of OFDM symbols forming the downlink control channels, multiplexing of the downlink control channel, the downlink shared data channel, the multicast channel, and the like. Then, the radio resource controller 10 outputs a control signal for specifying these management items to the controller 11, and informs the mobile station device 2 of these items as the control data through the controller 11 and the transmission processor 13. The radio resource controller 10 outputs a multicast sub-frame allocation pattern with a control signal to the controller 11, and then previously transmits the multicast-sub-frame allocation pattern to the mobile station device 2 as system information through the controller 11 and the transmission processor 13. Additionally, the radio resource controller 10 manages an uplink modulation scheme, an encoding rate, multiplexing, and the like, and outputs a control signal for specifying these management items to the controller 11.

To control the transmission processor 13 and the reception processor 12 based on the control signal received from the radio resource controller 10, the controller 11 outputs a control signal to the transmission processor 13 and the reception processor 12. The controller 11 controls the transmission processor 13 and the reception processor 12 with respect to a modulation scheme of transmission and reception signals, a setting of an encoding rate, a setting of the number of OFDM symbols forming the downlink control channels, a setting of allocation of each channel to a resource element, allocation of multicast sub-frames and unicast sub-frames, generation of the downlink pilot channels, and the like. The controller 11 generates control data to be allocated to the downlink control channel based on the control signal received from the radio resource controller 10, and instructs the transmission processor 13 to perform transmission.
Additionally, the controller 11 generates system information to be allocated to the downlink shared data channel including the multicast sub-frame allocation pattern received from the radio resource controller 10. Then, the controller 11 instructs the transmission processor 13 to transmit, as data, the system information with the information data.

Based on the input from controller 11, the transmission processor 13 generates the downlink shared data channel for transmitting the information data received from an external unit and the information data and the system information received from the controller 11, the multicast channel for transmitting multicast data received from an external unit, the downlink control channel, the downlink pilot channel, and the control format indicator channel. Then, the transmission processor 13 multiplexes each of the generated channels with the downlink radio frame, and performs transmission to each mobile station device 2 via multiple antennas, such as four transmit antennas. Operations concerning the broadcast channel, the downlink synchronization channel, and the downlink HARQ indicator channel have little relation to the present invention, and therefore explanations of operations thereof are omitted here.

Based on the input from the controller 11, the reception processor 12 receives, via the receive antenna, the uplink control channel, the uplink shared data channel, the uplink pilot channel, and the random access channel, which are transmitted by each mobile station device 2. Then, the reception processor 12 outputs the information data detected from the uplink shared data channel to an external unit. An operation concerning the uplink has little relation to the present invention, and explanations thereof are omitted here.

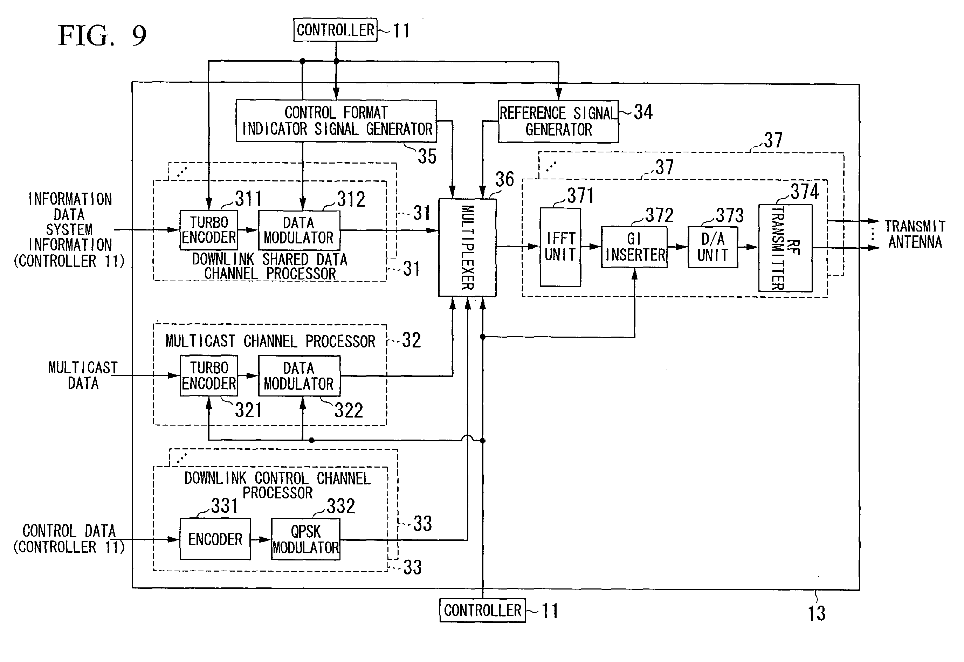

FIG. 9 is a schematic block diagram illustrating the internal configuration of the transmission processor 13 of the base station device 1 according to the present embodiment. The transmission processor 13 of the base station device 1 includes: multiple downlink shared data channel processors 31; a multicast channel processor 32; multiple downlink control channel processors (first-type control signal generators) 33; a reference signal generator 34; a control format indicator signal generator (second-type control signal generator) 35; a multiplexer 36; and per-antenna transmission processors (transmitter) 37 for respective transmit antennas. Each set of the downlink shared data channel processor 31, the downlink control channel processor 33, and the per-antenna transmission processor 37 for each transmit antenna has a similar configuration and function. For this reason, only one set thereof is representatively explained hereinafter.

The downlink shared data channel processor 31 performs a downlink shared data channel process on the information data received from an external unit and the system information received from the controller 11. In other words, each downlink shared data channel processor 31 receives information data addressed to any one of the mobile station devices 2, and then performs turbo coding and data modulation to generate a signal addressed to the one of the mobile station devices 2. Meanwhile, each downlink shared data channel processor 31 receives system information such as the multicast sub-frame allocation pattern, and then performs turbo coding and data modulation to generate a signal addressed to an unspecified number of mobile station devices 2. The downlink shared data channel processor 31 includes a turbo encoder 311 that performs the turbo coding and a data modulator 312 that performs the data modulation.
An encoding rate of the turbo coding by the turbo encoder 311 and a modulation scheme of the data modulation by the data modulator 312 follow instructions given by control signals from the controller 11.

The multicast channel processor 32 performs a multicast channel process on the multicast data received from an external unit. In other words, the multicast channel processor 32 receives the multicast data, and then performs turbo coding and data modulation to generate a signal addressed to an unspecified number of mobile station devices 2. The multicast channel processor 32 includes a turbo encoder 321 that performs the turbo coding and a data modulator 322 that performs the turbo modulation.

The downlink control channel processor 33 performs a downlink control channel process on the control data received from the controller 11. In other words, each downlink control channel processor 33 receives control data addressed to any one of the mobile station devices 2, the control data including downlink radio resource assignment information or uplink radio resource assignment information addressed to the one of the mobile station devices 2, and then performs coding and QPSK modulation to generate a signal of the control data. Meanwhile, each downlink control channel processor 33 receives control data addressed to multiple mobile station devices 2, which is transmit power command information addressed to the mobile station devices 2, and then performs coding and QPSK modulation to generate a signal of the control data.

The downlink control channel processor 33 generates a signal of control data including items according to the type of a time-frame to which the signal generated by the processor is allocated (first-type control signal). For example, items of the control data allocated to the unicast sub-frame include uplink radio resource assignment information, downlink radio resource assignment information, and transmit power command information. Items of the control data allocated to the multicast sub-frame include uplink radio resource assignment information and transmit power command information. The downlink control channel processor 33 includes an encoder 331 that performs the coding and a QPSK modulator 332 that performs the QPSK modulation.

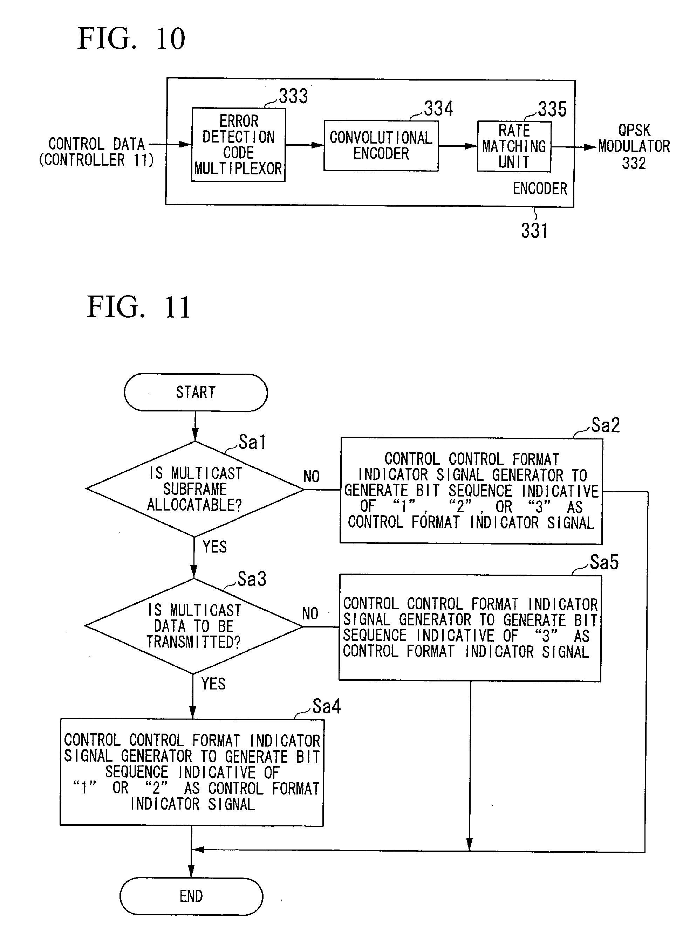

FIG. 10 is a schematic block diagram illustrating an internal configuration of the encoder 331 of the downlink control channel processor 33. The encoder 331 of the downlink control channel processor 33 includes an error detection code multiplexer 333, a convolutional encoder 334, and a rate matching unit 335.
The encoder 331 of the downlink control channel processor 33 performs coding on the control data received from the controller 11. In other words, the error detection code multiplexer 333 included in the encoder 331 of the downlink control channel processor 33 multiplexes an error detection code generated using a predetermined generating polynomial with the control data. The convolutional encoder 334 convolutionally-codes the control data multiplexed with the error detection code. The rate matching unit 335 performs a repetition process and a puncture process on the convolutionally-coded control data, and encodes a signal of the control data.

The per-transmit antenna transmission processor 37 transmits, via each transmit antenna, a signal resulting from the multiplexing for each transmit antenna by the multiplexer 36. The per-transmit antenna transmission processor 37 includes: an IFFT (Inverse Fast Fourier Transform) 371; a GI (Guard Interval) inserter 372; a D/A (Digital/Analog) unit 373; and an RF (Radio Frequency) transmitter 374.

### <Transmission Process of Base Station Device 1>

Each of the downlink shared data channel processors 31 performs a baseband process for performing OFDM transmission of the information data received from the external unit and the system information received from the controller 11 (hereinafter, the information data and the system information are collectively called "data"). In other words, according to the instruction on the encoding rate from the controller 11, the turbo encoder 311 included in the downlink shared data channel processor 31 performs error correction coding using a turbo code for enhancing the error resistance of the input data. The data modulator 312 modulates the data having been subjected to the error correction coding by the turbo encoder 311, using the modulation scheme specified by the controller 11 among modulation schemes, such as QPSK, 16QAM (16 Quadrature Amplitude Modulation), 64QAM (64 Quadrature Amplitude Modulation), and thus generates modulation symbols.

The multicast channel processor 32 performs a baseband process for performing OFDM transmission of the multicast data received from the external unit. In other words, according to the instruction on the encoding rate from the controller 11, the turbo encoder 321 included in the multicast channel processor 32 performs error correction coding using a turbo code for enhancing the error resistance of the inputted multicast data. The data modulator 322 modulates the multicast data having been subjected to the error correction coding by the turbo encoder 321, using the modulation scheme specified by the controller 11 among modulation schemes, such as QPSK, 16QAM (16 Quadrature Amplitude Modulation), 64QAM (64 Quadrature Amplitude Modulation), and thus generates modulation symbols.

Each of the downlink control channel processors 33 performs a baseband process for performing OFDM transmission of the control data. The encoder 331 multiplexes the control data received from the controller 11 with error detection codes for the error detection encoder 333 to detect errors of the control data, the error detection codes being generated using a predetermined generating polynomial. The convolutional encoder 334 performs error correction coding on the control data multiplexed with the error correction code, using a convolutional code for enhancing the error resistance of the control data. The rate matching unit 335 performs, on the control data having been subjected to the error correction coding, a repetition process and a puncture process for matching the size upon the multiplexer 36 multiplexing the control data with the downlink control channel. The QPSK modulator 332 performs QPSK modulation on the control data coded by the encoder 331 (the control data rate-matched by the rate matching unit 335) to generate modulation symbols.

Based on the control signal received from the controller 11, the reference signal generator 34 generates a reference signal for the downlink control channel, the downlink shared data channel, and the like which are transmitted on the downlink pilot channel from each transmit antenna of the base station device 1, and a reference signal for the multicast channel.
Based on the control signal from the controller 11, the control format indicator signal generator 35 generates a control format indicator signal for transmitting, on the control format indicator channel, information indicative of regions (OFDM symbol) to which the downlink control channel signals are allocated, the regions being included in a sub-frame to be allocated, and the control format indicator signal being allocated to a predetermined region of each sub-frame shown in FIG. 6. Additionally, when sub-frames to be allocated are specified as multicast sub-frame allocatable by the previously-stored multicast sub-frame allocation pattern, the control format indicator signal generator 35 generates a control format indicator signal which indicates, as explained above, regions (OFDM symbols) to which the downlink control channel signals are allocated, and which indicates the type of the sub-frame to be allocated.

Further, when the sub-frame, to which the signal generated by the control format indicator signal generator 35 is allocated, is specified as multicast sub-frame allocatable by the multicast sub-frame allocation pattern, the control format indicator signal generator 35 generates, based on the control signal from the controller 11, a control format indicator signal indicating a value which is not used for specifying the number of OFDM symbols in the multicast sub-frame to which the downlink control channels are allocated, and which is used for specifying that the sub-frame is the unicast sub-frame and the number of OFDM symbols to which the downlink control channels are allocated. The base station device 1 previously holds the multicast sub-frame allocation pattern which is obtained by receiving from an external unit or in another way.

Based on the control signal from the controller 11, the multiplexer 36 allocates to resource elements for each transmit antenna: the modulation symbols of the data addressed to each mobile station device 2 which have been subjected to the encoding, the modulation, and the like and outputted from each downlink shared data channel processor 31; the modulation symbols of the multicast data addressed to the mobile station device 2 which have been subjected to the encoding, the modulation, and the like and outputted from each multicast channel processor 32; the modulation symbols of the control data which have been subjected to the coding, the modulation, and the like and outputted from the downlink control channel processor 33; the control format indicator signal; and the reference signal. In other words, based on the type of sub-frame determined by the controller 11, the multiplexer 36 multiplexes the multicast sub-frame and the unicast sub-frame to which the downlink control channel and the control format indicator signal are allocated, respectively.

The multiplexer 36 does not multiplex, to the same sub-frame, the modulation symbol generated by the downlink shared data channel processor 31 and the modulation symbol generated by the multicast channel processor 32. In other words, the multiplexer 36 allocates the modulation symbol generated by the downlink shared data channel processor 31 to a resource element in the unicast sub-frame. Meanwhile, the multiplexer 36 allocates a transmission signal generated by the multicast channel processor 32 to a resource element in the multicast sub-frame.
Further, the multiplexer 36 allocates the downlink radio resource assignment information, the uplink radio resource assignment information, and the transmit power command information to the downlink control channel in the unicast sub-frame. Meanwhile, the multiplexer 36 allocates the uplink radio resource assignment information and the transmit power command information to the downlink control channel in the multicast sub-frame.

The IFFT unit 371 performs inverse fast Fourier transform on the signal to which the modulation symbols have been allocated by the multiplexer 36 to resource elements for the respective transmit antennas, and then performs OFDM modulation. Based on the control signal from the controller 11, the GI inserter 372 adds, according to the unicast sub-frame or the multicast sub-frame, a different guard interval to the signal having been subjected to the OFDM modulation by the IFFT unit 371, and thus forms OFDM symbols that become a baseband digital signal. The guard inserter 372 specifies different time lengths of guard intervals between the multicast channel and the downlink control channel, which are included in the multicast sub-frame. In the case of the multicast sub-frame, the GI inserter 372 gives an instruction to multiplex extra samples between the downlink control channel and the multicast channel. The guard interval is obtained by a known method of duplicating the head and end portions of symbols to be transmitted. The D/A unit 373 converts the baseband digital signal received from the GI inserter 372 into an analog signal.

The RF transmitter 374 generates, from the analog signal received from the D/A unit 373, the same-phase element and orthogonal element of the intermediate frequency, removes frequency elements that are unnecessary for the intermediate frequency, converts (upconverts) the intermediate frequency signal into a high frequency signal, removes unnecessary frequency elements, performs power amplification, outputs the amplified signal to the corresponding transmit antenna, and then performs transmission. The base station device 1 includes the per-antenna transmission processors 37, the number of which corresponds to the number of transmit antennas used for transmission, i.e., five in the present embodiment. Then, the per-antenna transmission processor 37 processes a signal addressed to the corresponding transmit antenna, the signal being included in the signals addressed to the respective transmit antennas which are outputted by the multiplexer 36.

FIG. 11 is a flowchart illustrating control performed by the control format indicator signal generator 35 included in the controller 11 of the base station device 1 when the base station device 1 transmits unicast sub-frame signals from one or two transmit antennas. First, the controller 11 determines whether or not a sub-frame, which is currently targeted for the process, is the sub-frame specified as multicast sub-frame allocatable by the multicast sub-frame allocation pattern that is stored by or received from the radio resource controller 10, i.e., the multicast sub-frame allocation pattern having been transmitted to the mobile station device 2 (Sa1).

If the controller 11 determines that the target sub-frame is not the sub-frame specified as multicast sub-frame allocatable (Sa1: NO), since the target sub-frame is the unicast sub-frame in this case, the controller 11 controls the control format indicator signal generator 35 to select and generate, as a control format indicator signal, a bit sequence indicative of "1," "2," or "3" according to the number of OFDM symbols to which the downlink control channels are allocated (Sa2).
If the controller 11 determines in step Sa1 that the target sub-frame is the sub-frame specified as multicast sub-frame allocatable by the multicast sub-frame allocation pattern (Sa1: YES), the controller 11 further determines whether or not to transmit multicast data (Sa3).

If there is multicast data to be transmitted and if the controller 11 determines in step Sa3 to transmit multicast data (Sa3: YES), the controller 11 controls the control format indicator signal generator 35 to select and generate, as a control format indicator signal, a bit sequence indicative of "1" or "2" according to the number of OFDM symbols to which the downlink control channels are allocated (Sa4). Thus, the controller 11 simultaneously performs specification that the target sub-frame is the multicast sub-frame and specification of the number of OFDM symbols to which the downlink control channels are allocated.

If there is no multicast data to be transmitted and if the controller 11 determines to transmit information data (Sa3: NO), the controller 11 controls the control format indicator signal generator 35 to generate, as a control format indicator signal, a bit sequence indicative of "3" (Sa5). Thus, the controller 11 simultaneously performs specification that the target sub-frame is the unicast sub-frame and specification of the number "3" of OFDM symbols to which the downlink control channels are allocated.

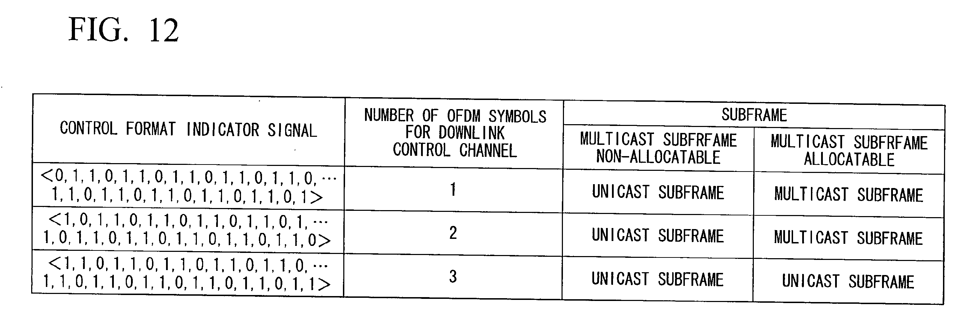

FIG. 12 is a table indicating the relationship between a bit sequence indicated by the control format indicator signal, the type of sub-frame, and the number of OFDM symbols to which the downlink control channels are allocated, when the control format indicator signal is generated by the control method shown in FIG. 11.

In the present embodiment, as shown in the table of FIG. 12, the sub-frame, which is not specified as multicast sub-frame allocatable by the multicast sub-frame allocation pattern (multicast sub-frame non-allocatable), is always the unicast sub-frame. For this reason, if the control format indicator signal is the bit sequence indicative of "1," i.e., <0, 1, 1, 0, 1, 1, 0, 1, 1, 0, 1, 1, 0, 1, 1, 0, 1, 1, 0, 1, 1, 0, 1, 1, 0, 1, 1, 0, 1, 1, 0, 1> (hereinafter, "<0, 1, ...>"), the number of OFDM symbols, to which the downlink control channels are allocated, indicates "1." If the control format indicator signal is the bit sequence indicative of "2," i.e., <1, 0, 1, 1, 0, 1, 1, 0, 1, 1, 0, 1, 1, 0, 1, 1, 0, 1, 1, 0, 1, 1, 0, 1, 1, 0, 1, 1, 0, 1, 1, 0> (hereinafter, "<1, 0, ...>"), the number of OFDM symbols, to which the downlink control channels are allocated, indicates "2." If the control format indicator signal is the bit sequence indicative of "3," i.e., <1, 1, 0, 1, 1, 0, 1, 1, 0, 1, 1, 0, 1, 1, 0, 1, 1, 0, 1, 1, 0, 1, 1, 0, 1, 1, 0, 1, 1, 0, 1, 1> (hereinafter, "<1, 1, ...>"), the number of OFDM symbols, to which the downlink control channels are allocated, indicates "3."

Regarding the sub-frame specified as multicast sub-frame allocatable by the multicast sub-frame allocation pattern (multicast sub-frame allocatable), there are a case of multicast sub-frame and a case of the unicast sub-frame. If the control format indicator signal indicates <0, 1, ...>, the sub-frame is the multicast sub-frame, and the number of OFDM symbols, to which the downlink control channels are allocated, indicates "1." If the control format indicator signal indicates <1, 0, ...>, the sub-frame is the multicast sub-frame, and the number of OFDM symbols, to which the downlink control channels are allocated, indicates "2." If the control format indicator signal indicates <1, 1, ...>, the sub-frame is the unicast sub-frame, and the number of OFDM symbols, to which the downlink control channels are allocated, indicates "3."

The mobile station device 2 previously stores the correlation shown in the table of FIG. 12. Then, the mobile station device 2 can reference the control format indicator signal so as to determine whether the sub-frame, which is specified as multicast sub-frame allocatable by the multicast sub-frame allocation pattern, is the multicast sub-frame or the unicast sub-frame.

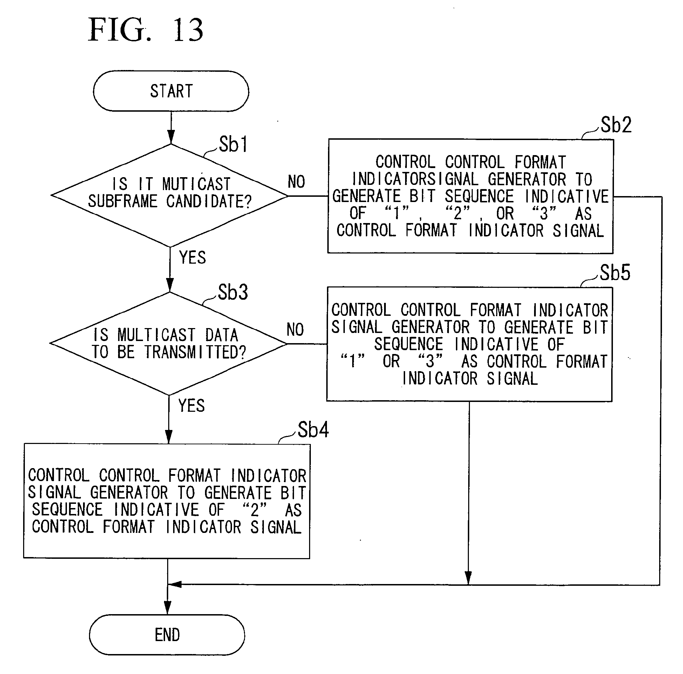

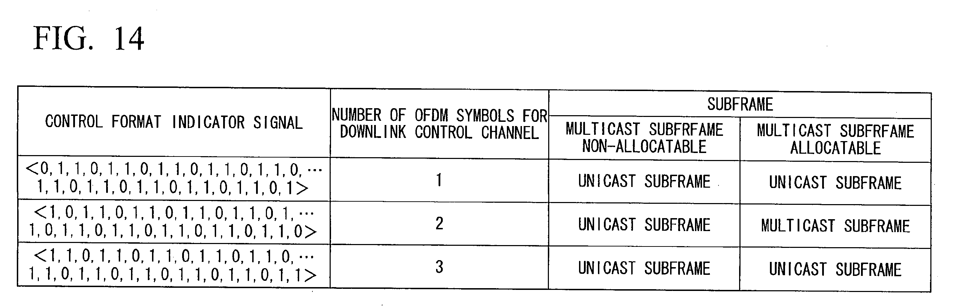

The correlation among a value indicated by the control format indicator signal, the sub-frame type, and the number of OFDM symbols to which the downlink control channels are allocated may be changed according to the number of transmit antennas used by the base station device 1 for transmission. For example, when unicast sub-frame signals are transmitted using one or two transmit antennas, the controller 11 performs control according to the flowchart shown in FIG. 11, and the base station device 1 and the mobile station device 2 use the correlation shown in the table of FIG. 12. When unicast sub-frame signals are transmitted using four transmit antennas, the controller 11 performs control according to a flowchart shown in FIG. 13 which will be explained later, and uses a correlation shown in the table of FIG. 14 which will be explained later.

FIG. 13 is a flowchart illustrating control performed by the control format indicator signal generator 35 included in the controller 11 of the base station device 1 when the base station device 1 transmits unicast sub-frame signals from four transmit antennas. First, the controller 11 determines whether or not a sub-frame, which is currently targeted for the process, is the sub-frame specified as multicast sub-frame allocatable by the multicast sub-frame allocation pattern that is stored by or received from the radio resource controller 10, i.e., the multicast sub-frame allocation pattern having been transmitted to the mobile station device 2 (Sb1).

If the controller 11 determines that the target sub-frame is not the sub-frame specified as multicast sub-frame allocatable (Sb1: NO), since the target sub-frame is the unicast sub-frame in this case, the controller 11 controls the control format indicator signal generator 35 to select and generate, as a control format indicator signal, a bit sequence indicative of "1," "2," or "3" according to the number of OFDM symbols to which the downlink control channels are allocated (Sb2).
If the controller 11 determines in step Sa1 that the target sub-frame is the sub-frame specified as multicast sub-frame allocatable by the multicast sub-frame allocation pattern (Sb1: YES), the controller 11 further determines whether or not to transmit multicast data (Sb3).

If there is multicast data to be transmitted and if the controller 11 determines in step Sb3 to transmit multicast data (Sb3: YES), the controller 11 controls the control format indicator signal generator 35 to generate, as a control format indicator signal, a bit sequence indicative of "2" since the number of OFDM symbols to which the downlink control channels are allocated is always "2" in the case of the four transmit antennas (Sb4). Thus, the controller 11 performs specification that the target sub-frame is the multicast sub-frame.

If there is no multicast data to be transmitted and if the controller 11 determines to transmit information data (Sb3: NO), the controller 11 controls the control format indicator signal generator 35 to generate, as a control format indicator signal, a bit sequence indicative of "1" or "3" (Sb5). Thus, the controller 11 simultaneously performs specification that the target sub-frame is the unicast sub-frame and specification of the number of OFDM symbols, "1" or "3," to which the downlink control channels are allocated.

FIG. 14 is a table indicating the relationship between a bit sequence indicated by the control format indicator signal, the sub-frame structure, and the number of OFDM symbols to which the downlink control channels are allocated, when the control format indicator signal is generated by the control method shown in FIG. 13, which is the case where transmission is performed using the four transmit antennas.

In the present embodiment, as shown in the table of FIG. 14, the sub-frame, which is not specified as multicast sub-frame allocatable by the multicast sub-frame allocation pattern (multicast sub-frame non-allocatable), is always the unicast sub-frame. For this reason, if the control format indicator signal indicates <0, 1, ...>, the number of OFDM symbols, to which the downlink control channels are allocated, indicates "1." If the control format indicator signal indicates <1, 0, ...>", the number of OFDM symbols, to which the downlink control channels are allocated, indicates "2." If the control format indicator signal indicates <1, 1, ...>, the number of OFDM symbols, to which the downlink control channels are allocated, indicates "3." Thus, the correlation becomes the same as that shown in the table of FIG. 12.

Regarding the sub-frame specified as multicast sub-frame allocatable by the multicast sub-frame allocation pattern (multicast sub-frame allocatable), there are a case of multicast sub-frame and a case of the unicast sub-frame. If the control format indicator signal indicates <0, 1, ...>, the sub-frame is the unicast sub-frame, and the number of OFDM symbols, to which the downlink control channels are allocated, indicates "1." If the control format indicator signal indicates <1, 0, ...>, the sub-frame is the multicast sub-frame, and the number of OFDM symbols, to which the downlink control channels are allocated, indicates "2." If the control format indicator signal indicates <1, 1, ...>, the sub-frame is the unicast sub-frame, and the number of OFDM symbols, to which the downlink control channels are allocated, indicates "3."

When unicast sub-frames are transmitted using four transmit antennas, as shown in the example structure of the unicast sub-frame shown in FIG. 3 and in the example structure of the multicast sub-frame shown in FIG. 5, the number of OFDM symbols, to which the downlink control channels are allocated, has to be "2" or greater for the downlink pilot channels to be allocated for the respective four transmit antennas. Since the maximum number of OFDM symbols in the multicast sub-frame is "2," the sub-frame specified as multicast sub-frame allocatable may be regarded as the unicast sub-frame when the four antennas are used for transmitting the unicast sub-frame signals and the control format indicator signal indicates the number of OFDM symbols other than "2." Therefore, when four antennas are used for transmitting the uncast sub-frame signals with respect to the control format indicator signal that indicates the number of OFDM symbols "1" when one or two transmit antennas are used for transmitting the unicast sub-frame signals, the sub-frame type of "unicast sub-frame" is correlated to the number of OFDM symbols "1" so that the sub-frame specified as multicast sub-frame allocatable can be selected as a unicast sub-frame corresponding to the number of OFDM symbols "1," thereby enabling an increase in the number of OFDM symbols.

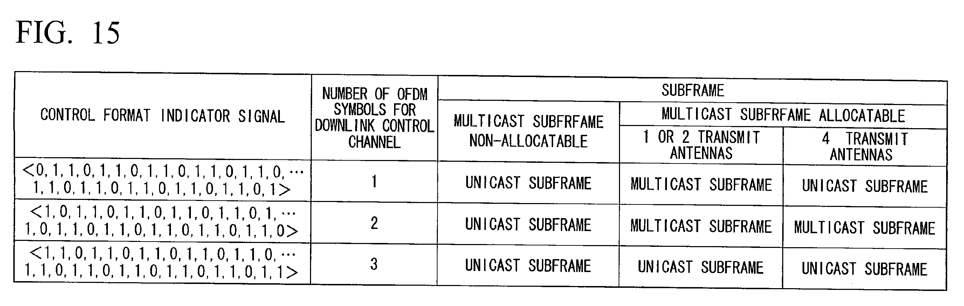

Thus, when the controller 11 differently controls the control format indicator signal generator 35 according to the number of transmit antennas, the mobile station device 2 previously stores, in addition to the correlation shown in FIG. 12, a correlation between a bit sequence indicated by the control format indicator signal included in the sub-frame specified as multicast sub-frame allocatable by the multicast sub-frame allocation pattern when the base station device 1 transmits unicast sub-frame signals using four transmit antennas, the sub-frame type, and the number of OFDM symbols to which the downlink control channels are allocated, as shown in FIG. 15,

Then, the mobile station device 2 references the number of transmit antennas used by the base station device 1 (which is included in the system information) in addition to the control format indicator signal. Thus, the mobile station device 2 can determine whether the sub-frame specified by the multicast sub-frame allocation pattern has been transmitted on the multicast sub-frame or unicast sub-frame. Even when the number of transmit antennas for transmitting unicast sub-frame signals is four and the control format indicator signal indicates <0, 1, ...>, the mobile station device 2 can transmit signals as the unicast sub-frame.
Even when the base station device 1 transmits unicast sub-frame signals using four transmit antennas, the base station device 1 may control the controller 11 according to the correlation shown in the table of FIG. 12. Then, the mobile station device 2 may determine the type of received sub-frame according to the correlation shown in the table of FIG. 12.

When the unicast sub-frame is transmitted in the sub-frame specified as multicast sub-frame allocatable by the multicast sub-frame allocation pattern, control may be performed on the multicast sub-frame non-allocatable sub-frame such that the number of OFDM symbols to which the downlink control channels indicated by the control format indicator signal are allocated, is different from the number of OFDM symbols to which actual downlink control channels are allocated.
For example, in the sub-frame specified as multicast sub-frame allocatable by the multicast sub-frame allocation pattern, the base station device 1 controls the control format indicator signal generator 35 to generate the control format indicator signal indicative of <1, 1, ...>, and controls the downlink control channel processor 33 and the multiplexer 36 to multiplex the downlink control channel with 1 OFDM symbol or 2 OFDM symbols.

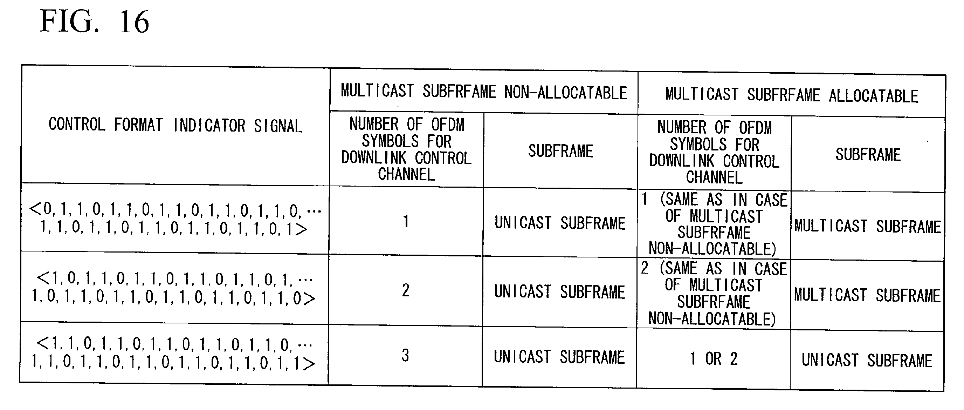

When the base station device 1 performs such control, the mobile station device 2 previously stores a correlation as shown in FIG. 16 that is a modification of FIG. 12, the correlation being such that the number of OFDM symbols to which the downlink control channels is "1" or "2" in the sub-frame specified by the multicast sub-frame allocation pattern when the control format indicator signal indicates <1, 1, ...>. Then, the mobile station device 2 references the stored correlation, and thereby determines the sub-frame type and the number of OFDM symbols to which the downlink control channels are allocated.

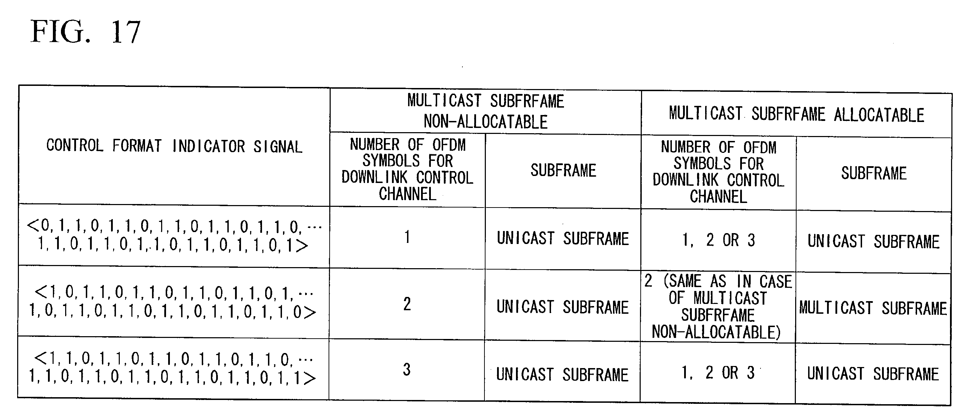

FIG. 17 is a chart indicating a correlation which is a modification of FIG. 14, in which when unicast sub-frame signals are transmitted using four transmit antennas, the correlation between the bit sequence indicated by the control format indicator signal in the sub-frame specified as multicast sub-frame allocatable by the multicast sub-frame allocation pattern and the number of OFDM symbols to which the downlink control channels are allocated is different from the correlation in the case of the sub-frame not specified as multicast sub-frame allocatable by the multicast sub-frame allocation pattern.

When a unicast sub-frame is transmitted in a sub-frame specified as multicast sub-frame allocatable by the multicast sub-frame allocation pattern, the correlation between the bit sequence indicated by the control format indicator signal and the number of OFDM symbols to which the downlink control channels are allocated is changed. Regarding the number of OFDM symbols to which the downlink control channels are allocated, for which the correlation is changed, one value is previously selected and determined from 1, 2, or 3 for each bit sequence indicated by the control format indicator signal. Then, the mobile station device 2 previously stores the correlation, and thereby determines the type of the received sub-frame and the number of OFDM symbols to which downlink control channels are allocated. For example, when a unicast sub-frame is transmitted in the sub-frame specified as multicast sub-frame allocatable, the number of OFDM symbols "2" is correlated to the control format indicator signal, which is correlated to the number of OFDM symbols "1" for the downlink control channels in the sub-frame specified as multicast sub-frame non-allocatable. Further, when a unicast sub-frame is transmitted in the sub-frame specified as multicast sub-frame allocatable, the number of OFDM symbols "1" is correlated to the control format indicator signal, which is correlated to the number of OFDM symbols "3" for the downlink control channels in the sub-frame specified as multicast sub-frame non-allocatable.

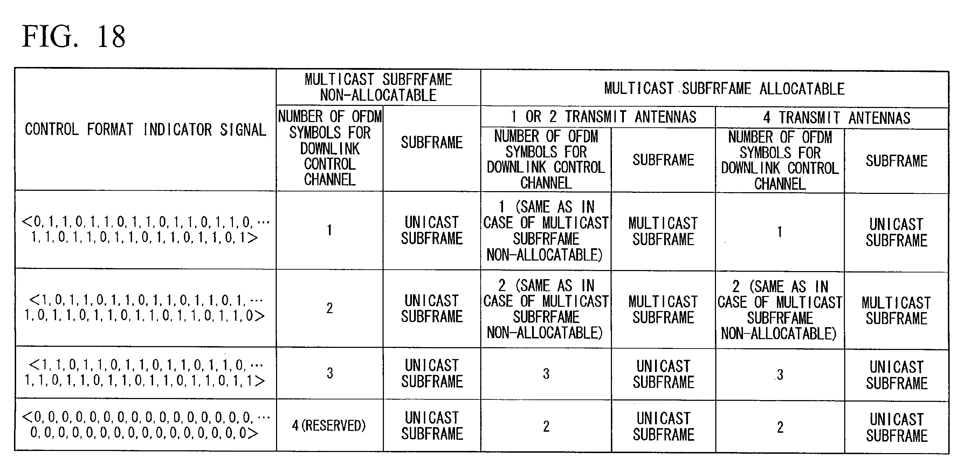

FIG. 18 is a chart indicating the relationship among the bit sequence indicated by the control format indicator signal, the sub-frame type, and the number of OFDM symbols to which the downlink control channels are allocated when a reserved and unused control format indicator signal is used. As shown in FIG. 18, regarding the bit sequence <0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0> indicated by a reserved and unused control format indicator signal in the case of the sub-frame specified as multicast sub-frame non-allocatable by the multicast sub-frame allocation pattern, the number of OFDM symbols to which the downlink control channels are allocated ("2" in this case) may be correlated to the bit sequence in the case of the sub-frame specified as multicast sub-frame allocatable by the multicast sub-frame allocation pattern.
By use of the reserved control format indicator signal in this manner, as shown in FIG. 18, even when the sub-frame specified as multicast sub-frame allocatable by the multicast sub-frame allocation pattern is used as a unicast sub-frame, two numbers of OFDM symbols ("2" and "3" in this case) can be correlated to the control format indicator signal if one or two antennas are used for transmitting unicast sub-frame signals. If four antennas are used for the transmission, three numbers of OFDM symbols ("1," "2," or "3" in this case) can be correlated to the control format indicator signal.

As shown in FIGS. 16, 17, and 18, even if the control format indicator signal indicates the same value, a region (OFDM symbol) to which the downlink control channels are allocated, which is indicated by the control format indicator signal, differs according to other predetermined conditions. The other conditions include whether or not a sub-frame is specified as multicast sub-frame allocatable by the multicast sub-frame allocation pattern, the number of transmit antennas to be used for transmitting the downlink control channels, and the sub-frame type.

The base station device 1 and the mobile station device 2 have multiple correlations between the bit sequence indicated by the control format indicator signal and the downlink control channel. The base station device 1 may include information indicative of the correlation to be used in the system information in the broadcast channel, the system information in the downlink shared data channel, or the like, transmit the information, and thus inform the mobile station device 2 of the information.

### <Mobile Station Device 2>

When the bit sequence, which is indicated by the control format indicator signal in the sub-frame specified as multicast sub-frame allocatable by the multicast sub-frame allocation pattern transmitted by the system information in the downlink shared data channel, is different from the bit sequence used in the multicast sub-frame, the mobile station device 2 of the present embodiment recognizes that the sub-frame on which information data is transmitted is used as a unicast sub-frame. On the other hand, when a value, which is indicated by the control format indicator signal, is the value used in the multicast sub-frame, the mobile station device 2 recognizes that the sub-frame is used as a multicast sub-frame. Further, the mobile station device 2 recognizes the number of OFDM symbols to which the downlink control channels are allocated from the correlation between the bit sequence indicated by the control format indicator signal and the number of OFDM symbols to which the downlink control channels are allocated, which have been previously stored.

Thus, based on the control format indicator signal, the mobile station device 2 of the present embodiment determines whether the sub-frame specified as multicast sub-frame allocatable by the multicast sub-frame allocation pattern is a unicast sub-frame or a multicast sub-frame. Then, the mobile station device 2 switches the item of control data targeted for the downlink control channel detecting process between when the sub-frame is determined to be the unicast sub-frame and when the sub-frame is determined to be the multicast sub-frame.

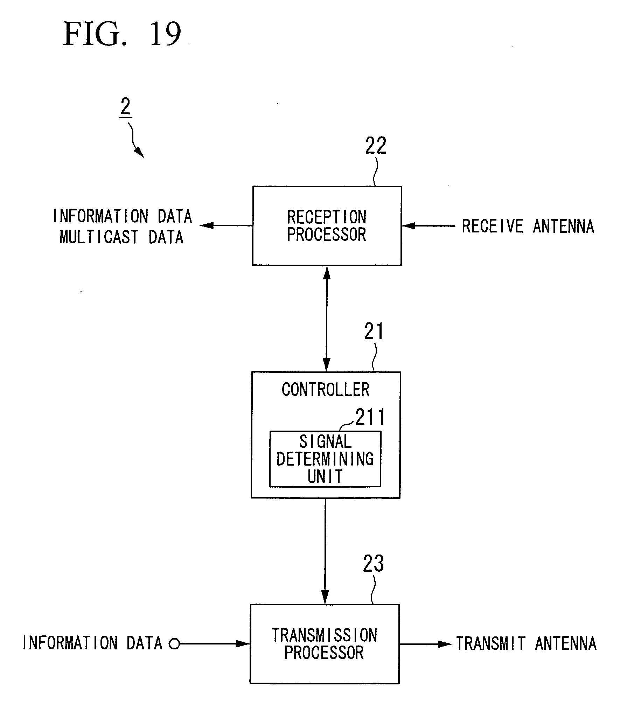

FIG. 19 is a schematic block diagram illustrating the configuration of the mobile station device 2 according to the present embodiment. As shown in FIG. 19, the mobile station device 2 includes a controller 21, a reception processor 22, and a transmission processor 23. The reception processor 22 performs a reception process on the downlink control channel, the downlink shared data channel, the multicast channel, the downlink pilot channel, and the control format indicator channel, which are received from the base station device 1 via the receive antenna. Then, the reception processor 22 outputs, to an external unit, the information data and the multicast data which are detected by the reception process. The reception processor 22 outputs, to the controller 21, the control data informed using the downlink control channel, the system information informed using the downlink shared data channel and the broadcast channel, and the control format indicator signal informed using the control format indicator channel.

The controller 21 controls the transmission processor 23 and the reception processor 22 based on the control data informed by the base station device 1 using the downlink control channel, the system information informed using the downlink shared data channel and the broadcast channel, and the control format indicator signal informed using the control format indicator channel.
The controller 21 includes a signal determining unit 211. The signal determining unit (frame-type determining unit) 211 determines the type of the sub-frame received by the reception processor 22 based on the previously-stored multicast allocation pattern and the control format indicator signal. In other words, based on the control format indicator signal received from the reception processor 22, the signal determining unit 211 determines whether the sub-frame, which is specified as multicast sub-frame allocatable by the multicast sub-frame allocation pattern, is the multicast sub-frame or the unicast sub-frame, and determines the number of OFDM symbols to which the downlink control channels are allocated. Then, the signal determining unit 211 gives instructions on a guard-interval removing method to the GI remover 223, instructions on a downlink control channel decoding method to the reception processor 22, and instructions on a multiplexing and demultiplexing method to the multiplexer/demultiplexer 225 that will be explained later.
Based on both the control format indicator signal and the number of transmit antennas used for transmission, which is included in the system information, whether the sub-frame specified as multicast sub-frame allocatable by the multicast sub-frame allocation pattern is the multicast sub-frame or the unicast sub-frame.

Based on the input from the controller 21, the transmission processor 23 transmits the information data received from the external unit and the control data received from the controller 21 using the uplink control channel, the uplink shared data channel, the uplink pilot channel, and the random access channel via the transmit antenna. An uplink process by the transmission processor 23 has no direct relation to the present invention, and therefore detailed explanations thereof are omitted here.

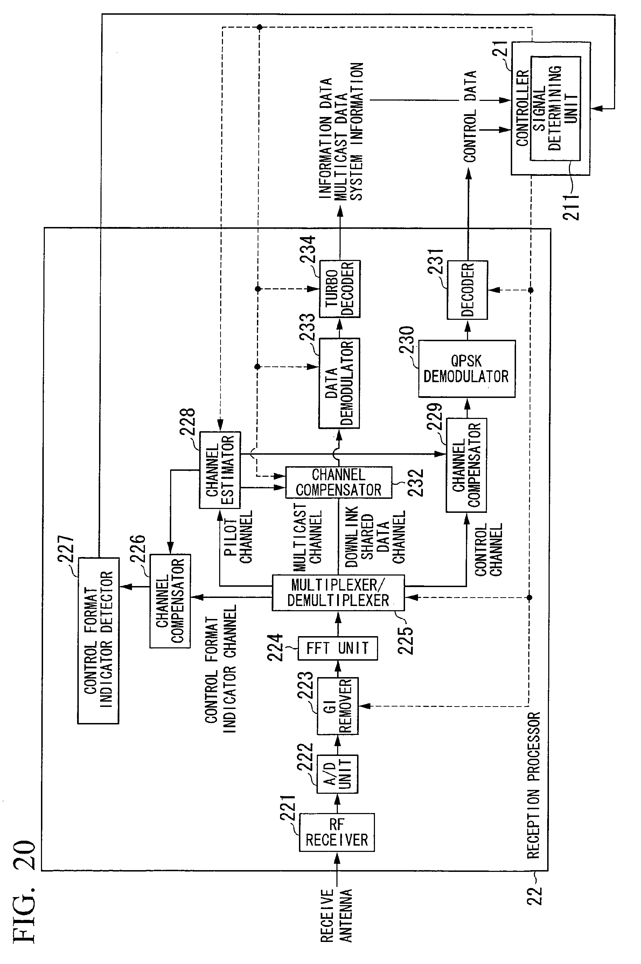

FIG. 20 is a schematic block diagram illustrating the internal configuration of the reception processor 22 of the mobile station device 2 according to the present embodiment. The reception processor 22 of the mobile station device 2 includes: an RF (Radio Frequency) receiver 221; an A/D (Analog/Digital) unit 222; a GI (Guard Interval) remover 223; an FFT (Fast Fourier Transform) unit 224; a multiplexer/demultiplexer 225; a channel estimator 228; a channel compensator 226, 229, and 232; a control format indicator detector 227; a data demodulator 233; a turbo decoder 234; a QPSK demodulator 230; and a decoder 231. In the present embodiment, the RF receiver 221, the A/D unit 222, the GI remover 223, and the FFT unit 224 function as a receiver.

The RF receiver 221 amplifies the signal received via the receive antenna, performs conversion (downconversion) into an intermediate frequency signal, removes unnecessary frequency elements, controls the amplification level to adequately maintain the signal level, and performs orthogonal decoding based on the same-phase elements and the orthogonal elements of the received signal. The A/D unit 222 converts the analog signal orthogonally-decoded by the RF receiver 221 into a digital signal. Based on the instructions from the controller 21, the GI remover 223 removes a guard interval element from the digital signal outputted from the A/D unit 222. The FFT unit 224 performs fast Fourier transform on the signal received from the GI remover 223, and then performs OFDM demodulation.

Based on the instructions from the controller 21, the multiplexer/demultiplexer 225 extracts, from the signal having been subjected to Fourier-transform by the FFT unit 224, i.e., the reception signal having been subjected to OFDM demodulation, the downlink pilot channel, the control format indicator channel, the downlink shared data channel, the multicast channel, and the downlink control channel, and outputs the extracted items.
Specifically, the multiplexer/demultiplexer 225 extracts the downlink pilot channel and the control format indicator channel which are allocated to the predetermined positions, and outputs the downlink pilot channel and the control format indicator channel to the channel estimator 228 and the channel compensator 226, respectively.

Further, based on the control format indicator signal included in the control format indicator channel that is inputted via the controller 21 and previously outputted to the channel compensator 226, the multiplexer/demultiplexer 225 extracts the downlink control channel including the radio resource assignment information determined by the signal determining unit 211 of the controller 21, and outputs the downlink control channel to the channel compensator 229.
Moreover, based on the radio resource assignment information included in the downlink control channel that is inputted via the controller 21 and previously outputted to the channel compensator 229, the multiplexer/demultiplexer 225 extracts the downlink shared data channel, and outputs the downlink shared data channel to the channel compensator 232.
Alternatively, based on the control signal received from the signal determining unit 211 of the controller 21, the control signal including the control format indicator signal included in the control format indicator channel previously outputted to the channel compensator 226, the multiplexer/demultiplexer 225 extracts multicast channel and outputs the multicast channels to the channel compensator 228.

Based on the results of receiving the known reference signal allocated to the downlink pilot channel demultiplexed by the multiplexer/demultiplexer 225, the channel estimator 228 estimates a channel variation for each transmit antenna of the base station device 1, and outputs a channel variation compensation value. Based on the channel variation compensation value from the channel estimator 228, the channel compensator 226 performs channel variation compensation on the signal of the control format indicator channel received from the multiplexer/demultiplexer 225.
The control format indicator detector 227 detects a control format indicator signal indicative of the number of OFDM symbols forming the downlink control channels, from the signal allocated to the control format indicator channel having been subjected to the channel variation compensation. Then, the control format indicator detector 227 outputs the control format indicator signal to the controller 21.

Based on the channel variation compensation value from the channel estimator 228, the channel compensator 232 performs channel variation compensation on the signal of the downlink shared data channel and the multicast channel which are received from the multiplexer/demultiplexer 225.
The data demodulator 233 demodulates the downlink shared data channel and the multicast channel which have been subjected to the channel variation compensation by the channel compensator 232. The demodulation is performed according to the modulation scheme used by the data modulators 312 of the base station device 1. The instruction on the modulation scheme of the downlink shared data channel is given from the controller 21 based on the information included in the downlink control channel. The instruction on the modulation scheme of the multicast channel is given from the controller 21 based on the system information included in the downlink shared data channel and the information included in the multicast channel.

The turbo decoder 234 decodes the downlink shared channel and the multicast channel which have been demodulated by the data demodulator 233. The system information included in the downlink shared data channel decoded by the turbo decoder 234 is inputted to the controller 21. The decoding is performed according to the encoding rate used by the turbo encoder 311 of the base station device 1. The instruction on the encoding rate of the downlink shared data channel is given from the controller 21 based on the information included in the downlink control channel. The instruction on the encoding rate of the multicast channel is given from the controller 21 based on the system information included in the downlink shared data channel and the information included in the multicast channel.

Based on the channel variation compensation value from the channel estimator 228, the channel compensator 229 performs channel variation compensation on the signal of the downlink control channel received from the multiplexer/demultiplexer 225.
The QPSK demodulator 230 performs QPSK demodulation on the downlink control channel having been subjected to the channel variation compensation by the channel compensator 226.
The decoder (first-type control signal detector) 231 decodes the downlink control channel demodulated by the QPSK demodulator 230 and detects each item of control data. In other words, the decoder 231 detects control data including the items corresponding to the type indicated by the results of the determination by the signal determining unit 211. Upon the detection process, the data size corresponding to the items corresponding to the type indicated by the results of the determination is used. Specifically, upon rate dematching in the detection process, rate dematching is performed so that the result of the rate dematching becomes the data size. The control data included in the downlink control channel decoded by the decoder 231 is inputted to the controller 21. The details of the decoder 231 are explained later.

The controller 21 outputs a control signal to the data demodulator 233 based on the information concerning the modulation scheme included in the control data. Additionally, the controller 21 outputs a control signal to the turbo decoder 234 based on information concerning the encoding rate included in the control data. Further, when the control data received from the decoder 231 is the downlink radio resource assignment information, the controller 21 outputs a control signal to the multiplexer/demultiplexer 225 so as to extract, from the allocated resource elements, the downlink shared data channel of the mobile station device 2 based on the downlink radio resource assignment information, and to output the extracted channel to the channel compensator 232.

Additionally, when the control data received from the decoder 231 is the uplink radio resource assignment information, the controller 21 outputs a control signal to the transmission processor 23 so as to transmit the uplink shared data channel based on the uplink radio resource assignment information.
Moreover, when the control data received from the decoder 231 is the transmit power command information, the controller 21 outputs a control signal to the transmission processor 23 so as to set the transmit power of the uplink shared data channel or the uplink control channel based on the transmit power command information.

Based on the control format indicator signal, the number of transmit antennas of the base station device 1, and the multicast sub-frame allocation pattern, the signal determining unit 211 refers to the correlation shown in the aforementioned example of FIG. 15. Then, the signal determining unit 211 determines the type of each sub-frame and the number of OFDM symbols to which the downlink control channels are allocated. Then, the signal determining unit 211 outputs a control signal based on the determination results to the multiplexer/demultiplexer 225 and a rate dematching unit 226 that will be explained later.

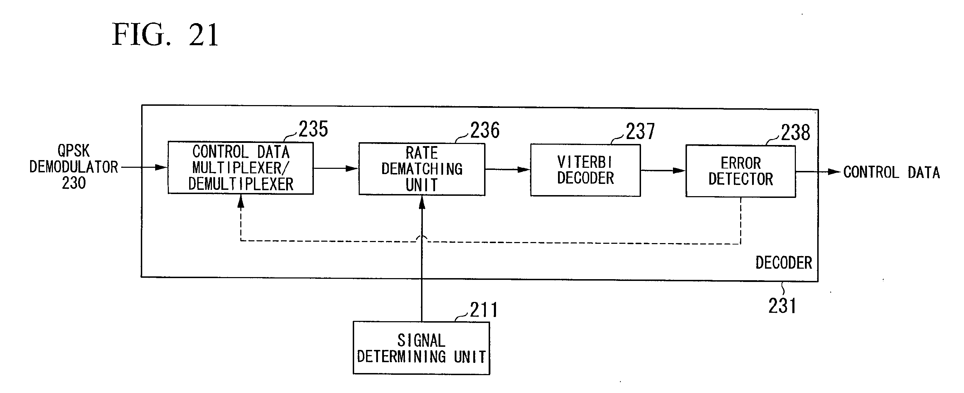

FIG. 21 is a schematic block diagram illustrating the internal configuration of the decoder 231 of the mobile station device 2. The decoder 231 includes a control data multiplexer/demultiplexer 235, a rate dematching unit 236, a Viterbi decoder 237, and an error detector 238.
The control data multiplexer/demultiplexer 235 demutiplexes the QPSK demodulation results (bit sequence) of the resource elements that have a possibility of being allocated the control data addressed to the mobile station device 2 into bit sequences of control data based on four patterns of a bit sequence for each 36 resource elements, a bit sequence for each 72 resource elements, a bit sequence for each 144 resource elements, and a bit sequence for each 238 resource elements. Then, the control data multiplexer/demultiplexer 235 outputs the demultiplexed bit sequences to the rate dematching unit 236.

Based on the control signal for specifying the sub-frame type from the signal determining unit 211, the rate dematching unit 236 performs rate dematching on the bit sequences of the control data received from the control data multiplexer/demultiplexer 235 so as to match the data length of each item of possible control data. Then, the rate dematching unit 236 outputs the resultant bit sequences to the Viterbi decoder 237.

In other words, when the signal determining unit 211 determines that the type is the multicast sub-frame, since the control data does not include the downlink radio resource assignment information, the rate matching unit 236, which has received the control signal specifying the result of the determination, determines the bit sequence of the control data received from the control data multiplexer/demultiplexer 235 to be control data including the item other than the downlink radio resource assignment information, i.e., the uplink radio resource assignment information or the transmit power command information. Then, rate dematching corresponding to the data length of the uplink radio resource assignment information and rate dematching corresponding to the data length of the transmit power command information are performed.

When the signal determining unit 211 determines that the type is the unicast sub-frame, the rate dematching unit 236, which has received the control signal for specifying the result of the determination, determines that the bit sequence of the control data received from the control data multiplexer/demultiplexer 235 is the downlink radio resource assignment information, the uplink radio resource assignment information, or the transmit power command information. Then, the rate dematching unit 236 performs rate dematching corresponding to the data length of the downlink radio resource assignment information, rate dematching corresponding to the data length of the uplink radio resource assignment information, and rate dematching corresponding to the data length of the transmit power command information.

The Viterbi decoder 237 convolutionally-decodes the bit sequence of the control data received from the rate dematching unit 236, and then outputs the results of the decoding to the error detector 238.
The error detector 238 extracts an error detection code multiplexed with the control data received from the Viterbi decoder 237, and then performs error detection.
If any errors are detected, the error detector 238 instructs, using a control signal, the control data multiplexer/demultiplexer 235 to perform a decoding process with an untried combination of a bit sequence, the number of resource elements, and rate dematching (data length). If no error is detected, the error detector 238 outputs a control data to the controller 21, and then instructs the data multiplexer/demultiplexer 235 to perform an untried decoding process.

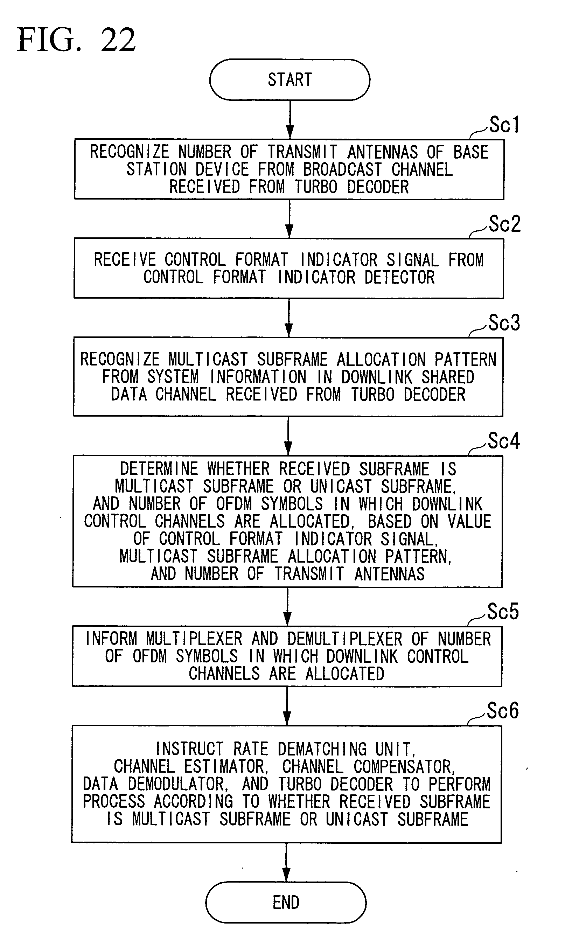

FIG. 22 is a flowchart illustrating an example operation of the signal determining unit 211 of the mobile station device 2. The signal determining unit 211 receives the number of transmit antennas from the system information in the broadcast channel received from the turbo decoder 234 (Sc1). Then, the signal determining unit 211 receives a value of the control format indicator signal from the control format indicator detector 237 (Sc2). Then, the signal determining unit 211 receives the system information in the downlink shared data channel from the turbo decoder 234, and then obtains the multicast sub-frame allocation pattern included in the system information (Sc3).

Then, based on the control format indicator signal, the multicast sub-frame allocation pattern, and the number of transmit antennas of the base station device 1, the signal determining unit 211 determines whether the received sub-frame is the multicast sub-frame or the unicast sub-frame, and determines the number of OFDM symbols to which the downlink control channels are allocated (Sc4). Then, the signal determining unit 211 informs, using a control signal, the multiplexer/demultiplexer 255 of the number of OFDM symbols to which the downlink control channels are allocated (Sc5). Then, the signal determining unit 211 gives, using a control signal, instructions to the rate dematching unit 236, the channel estimator 228, the channel compensator 232, the data demodulator 233, and the turbo decoder 234 to perform a process corresponding to whether the received sub-frame type is the multicast sub-frame or the unicast sub-frame (Sc6).

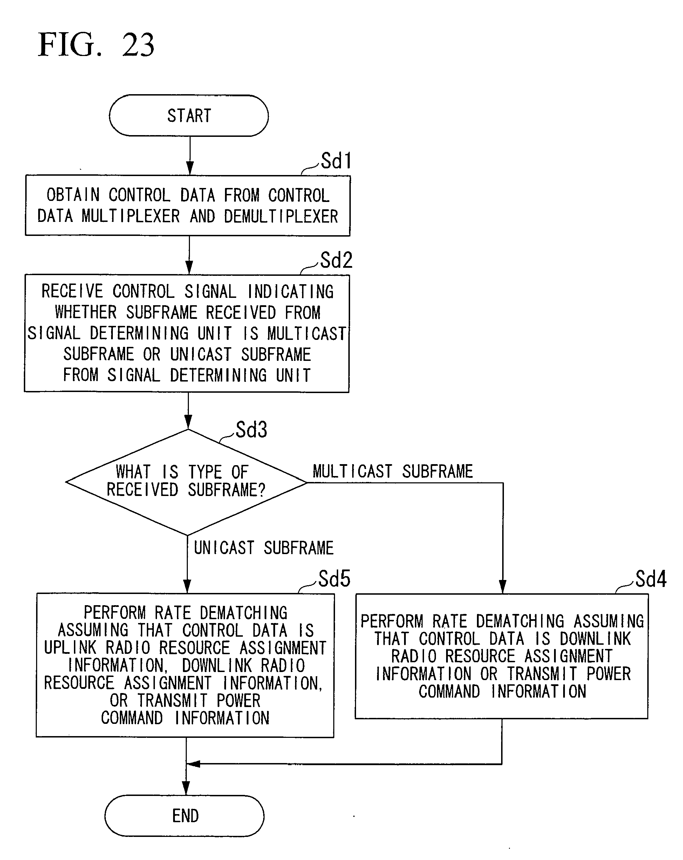

FIG. 23 is a flowchart illustrating an example operation of the rate dematching unit of the mobile station device 2. A bit sequence of a control data (bit sequence obtained by segmenting the downlink control channels into segments for each 36 resource elements, each 72 resource elements, each 144 resource elements, each 288 resource elements, and then QPSK-demodulating each segment) is inputted from the control data multiplexer/demultiplexer 235 to the rate dematching unit 236 (Sd1). Then, a control signal indicating whether the type of the sub-frame received from the signal determining unit 211 is the multicast sub-frame or the unicast sub-frame is inputted to the rate dematching unit 236 (Sd2).

When the type obtained by means of the control signal received from the signal determining unit 211 indicates the multicast sub-frame (Sd3: Multicast Sub-frame), the rate dematching unit 236 performs, on the each bit sequence of the control data obtained in step Sd1, rate dematching to the data length of the uplink radio resource assignment information and rate dematching to the data length of the transmit power command information (Sd4). When the type obtained by means of the control signal received from the signal determining unit 211 indicates the unicast sub-frame (Sd3: Unicast Sub-frame), the rate dematching unit 236 performs, on the each bit sequence of the control data obtained in step Sd1, rate dematching to the data length of the downlink radio resource assignment information, rate dematching to the data length of the uplink radio resource assignment information, and rate dematching to the data length of the transmit power command information (Sd5).

Thus, in the multicast sub-frame allocatable sub-frame, the base station device 1 transmits control format indicator signals indicative of different bit sequences between when allocating a multicast sub-frame to transmit multicast data (Sb3: YES) and when allocating a unicast sub-frame not to transmit multicast data (Sb3: NO). For this reason, even when the sub-frame is a multicast allocatable sub-frame, the mobile station device 2 can determine the type of the sub-frame based on the control format indicator signal transmitted from the base station device 1, and performs a decoding process that detects control data including the item corresponding to the determined item. Accordingly, the sub-frame type can be determined without causing a decrease in the transmission efficiency, and the number of downlink control channel decoding processes can be reduced.

A program, which is executed by the mobile station device 2 and the base station device 1 related to the present invention, is a program (computer functioning program) for controlling CPU (Central Processing Unit) and the like to implement the functions of the present embodiment which are related to the present invention. The information pieces used by these devices are temporarily stored in RAM (Random Access Memory) upon processing, and thereafter stored in various ROM (Read Only Memory) and HDD (Hard Disk Drive), such as Flash ROM. Then, the information is read, corrected, written by the CPU according to need.

A computer-readable recoding medium may store a program for implementing functions of: the radio resource controller 10 and the controller 11, which are shown in FIG. 8; the downlink shared data channel processor 31, the multicast channel processor 32, the downlink control channel processor 33, the reference signal generator 34, the control format indicator signal generator 35, the multiplexer 36, the IFFT unit 371, the GI inserter 372, and the D/A unit 373, which are shown in FIG. 9; the error detection code multiplexer 333, the convolutional encoder 334, and the rate matching unit 335, which are shown in FIG. 10; the controller 21 and the signal determining unit 211 which are shown in FIG. 19; the A/D unit 222, the GI remover 223, the FFT unit 224, the multiplexer/demultiplexer 225, the channel estimator 228, the channel compensator 226, the control format indicator detector 227, the channel compensator 232, the data demodulator 233, the turbo decoder 234, the channel compensator 229, the QPSK demodulator 230, the decoder 231, which are shown in FIG. 20; the control data multiplexer/demultiplexer 235, the rate dematching unit 236, the Viterbi decoder 237, and the error detector 238, which are shown in FIG. 21. Then, a computer system may read and execute the program stored in the recording medium, and thus executes the process of each unit. Here, the "computer system" includes an OS and hardware such as peripheral devices.

The "computer readable recording medium" is a portable medium such as a flexible disc, magneto-optical disc, ROM or CD-ROM, or a storage device, such as a hard disk, built in the computer system. Furthermore, the "computer readable recording medium" may also include a medium that dynamically holds a program for a short period of time, such as a communication line when a program is transmitted via a network such as the Internet or a communication network such as a telephone network, or a medium that holds a program for a fixed period of time, such as a volatile memory in a computer system serving as a server or client in the above situation. The program may be one for implementing part of the above functions, or the above functions may be implemented in combination with a program already recorded on the computer system.

The embodiments of the present invention have been described in detail with reference to the drawings. However, specific configurations are not limited to the embodiments and may include modifications without departing from the scope of the present invention.

### INDUSTRIAL APPLICABILITY

The present invention is suitable to, but is not limited to, a mobile communication system including a base station device and a mobile station device.

### REFERENCE SIGNS LIST

- 1:: base station device
- 2:: mobile station device
- 10:: radio resource controller
- 11:: controller
- 12:: reception processor
- 13:: transmission processor
- 21:: controller
- 22:: reception processor
- 23:: transmission processor
- 31:: downlink shared data channel processor
- 32:: multicast channel processor
- 33:: downlink control channel processor
- 34:: reference signal generator
- 35:: control format indicator signal generator
- 36:: multiplexer
- 37:: per-transmit antenna transmission processor
- 211:: signal determining unit
- 221:: RF receiver
- 222:: A/D unit
- 223:: GI remover
- 224:: FFT unit
- 225:: multiplexer/demultiplexer
- 226:: channel compensator
- 227:: control format indicator detector
- 228:: channel estimator
- 229:: channel compensator
- 230:: QPSK demodulator
- 231:: decoder
- 232:: channel compensator
- 233:: turbo demodulator
- 234:: turbo decoder
- 235:: control data multiplexer/demultiplexer
- 236:: rate dematching unit
- 237:: Viterbi decoder
- 238:: error detector
- 311:: turbo encoder
- 312:: data modulator
- 321:: turbo encoder
- 322:: data modulator
- 331:: encoder
- 332:: QPSK modulator
- 333:: error detection code multiplexer
- 334:: convolutional encoder
- 335:: rate matching unit
- 371:: IFFT unit
- 372:: GI inserter
- 373:: D/A unit
- 374:: RF transmitter

## Claims

1. A wireless communication system comprising:
a base station device that time-multiplexes a first-type sub-frame to which first-type data is allocated and a second-type sub-frame to which second-type data is allocated; and
a plurality of mobile station devices, each of which receives a signal addressed to each of the plurality of mobile station devices from sub-frames transmitted by the base station device,
wherein the base station device comprises:
a radio resource controller that determines a type of each of the sub-frames;
a first-type control signal generator that generates a first-type control signal including items according to whether the sub-frame to be allocated is a first-type sub-frame or a second type-sub-frame;
a second-type control signal generator that generates a second-type control signal that is allocated to a predetermined region of each of the sub-frames, the second-type control signal indicating a region in the sub-frame to be allocated, the first-type control signal being allocated to the region, the second-type control signal further indicating, in addition to the region, a type of the sub-frame to be allocated when the sub-frame to be allocated is specified as a sub-frame to which the first-type sub-frame is allocatable by first-type sub-frame candidate information that specifies a sub-frame to which the first-type sub-frame is allocatable, the first-type sub-frame candidate information being previously stored;
a multiplexer that multiplexes the first-type sub-frame and the second-type sub-frame to which the first-type control signal and the second-type control signal are allocated, respectively, according to the type of each of the sub-frames; and
a transmitter that transmits a signal resulting from the multiplexing by the multiplexer, and
each of the plurality of mobile station devices comprises:
a receiver that receives a signal transmitted from the base station device;
a frame-type determining unit that determines a type of a sub-frame of the signal received by the receiver, based on the first-type sub-frame candidate information previously stored and the second-type control signal of the sub-frame; and
a first-type control signal detector that detects, from the sub-frame of the signal received by the receiver, the first-type control signal including items corresponding to the type indicated by a result of the determination by the frame-type determining unit.

2. The wireless communication system according to claim 1, wherein
the first-type data is broadcast data or multicast data which is addressed to the plurality of mobile station devices, and
the second-type data is unicast data addressed to one of the plurality of mobile station devices.

3. The wireless communication system according to claim 1, wherein
the base station device previously stores the first-type sub-frame candidate information,
the receiver of each of the plurality of mobile station devices previously receives the first-type sub-frame candidate information transmitted, and
the first-type sub-frame candidate information used for the determination by the frame-type determining unit of each of the mobile station devices is the first-type sub-frame candidate information received by the receiver.

4. The wireless communication system according to claim 1, wherein any one of the region to which the first-type control signal indicated by the second-type control signal is allocated and the type of the sub-frame differs according to other conditions that are previously-determined, regardless of a value indicated by the second control signal.

5. The wireless communication system according to claim 4, wherein the other conditions comprise the number of transmit antennas used for the base station device to transmit the first-type control signal.

6. The wireless communication system according to claim 4, wherein the other conditions comprise whether or not a sub-frame to which the second-type control signal is allocated is specified as the sub-frame to which the first-type sub-frame is allocatable by the first-type sub-frame candidate information.

7. The wireless communication system according to claim 1, wherein the first-type control signal detector uses a size of data corresponding to the items upon detecting the first control signal including the items corresponding to the type indicated by the result of the determination by the frame-type determining unit.

8. The wireless communication system according to claim 2, wherein the items corresponding to the type indicated by the result of the determination by the frame-type determining unit are uplink radio resource assignment information and uplink transmit power command information when the type indicated by the result of the determination is the first-type sub-frame.

9. The wireless communication system according to claim 2, wherein the items corresponding to the type indicated by the result of the determination by the frame-type determining unit includes at least downlink radio resource assignment information when the type indicated by the result of the determination is the second-type sub-frame.

10. The wireless communication system according to claim 9, wherein the items corresponding to the type indicated by the result of the determination by the frame-type determining unit further includes uplink radio resource assignment information and uplink transmit power command information when the type indicated by the result of the determination is the second-type sub-frame.

11. A base station device that time-multiplexes a first-type sub-frame to which first-type data is allocated and a second-type sub-frame to which second-type data is allocated, the base station device comprising:
a radio resource controller that determines a type of each of sub-frames;
a first-type control signal generator that generates a first-type control signal including items according to the type of the sub-frame to be allocated;
a second-type control signal generator that generates a second-type control signal that is allocated to a predetermined region of each of the sub-frames, the second-type control signal indicating a region in the sub-frame to be allocated, the first-type control signal being allocated to the region, the second-type control signal further indicating, in addition to the region, a type of the sub-frame to be allocated when the sub-frame to be allocated is specified as a sub-frame to which the first-type sub-frame is allocatable by first-type sub-frame candidate information that specifies a sub-frame to which the first-type sub-frame is allocatable, the first-type sub-frame candidate information being previously stored;
a multiplexer that multiplexes the first-type sub-frame and the second-type sub-frame to which the first-type control signal and the second-type control signal are allocated, respectively, according to the type of each of the sub-frames determined by the radio resource controller; and
a transmitter that transmits a signal resulting from the multiplexing by the multiplexer.

12. A mobile station device that receives a signal in which a first-type sub-frame to which first-type data is allocated and a second-type sub-frame to which second-type data is allocated are time-multiplexed, the mobile station device comprising:
a receiver that receives the signal time-multiplexed;
a frame-type determining unit that determines a type of a sub-frame of the signal received by the receiver, based on first-type sub-frame candidate information and a second-type control signal of the sub-frame, the first-type sub-frame candidate information being previously stored, the first-type sub-frame candidate information being information specifying a sub-frame to which the first-type sub-frame is allocatable, the second-type control signal being allocated to a predetermined region of the sub-frame, the second-type control signal indicating a region in the sub-frame to be allocated, the first-type control signal including items corresponding to the type of the sub-frame to be allocated being allocated to the region, the second-type control signal further indicating a type of the sub-frame when the sub-frame is specified as a sub-frame to which the first-type sub-frame is allocatable by first-type sub-frame candidate information; and
a first-type control signal detector that detects, from the sub-frame of the signal received by the receiver, the first-type control signal including items corresponding to the type indicated by a result of the determination by the frame-type determining unit.

13. A radio transmission method for a base station device that time-multiplexes a first-type sub-frame to which first-type data is allocated and a second-type sub-frame to which second-type data is allocated, the radio transmission method comprising:
a first step of the base station device determining a type of each of sub-frames;
a second step of the base station device generating a first-type control signal including items according to the type of the sub-frame to be allocated;
a third step of the base station device generating a second-type control signal that is allocated to a predetermined region of each of the sub-frames, the second-type control signal indicating a region in the sub-frame to be allocated, the first-type control signal being allocated to the region, the second-type control signal further indicating, in addition to the region, a type of the sub-frame to be allocated when the sub-frame to be allocated is specified as a sub-frame to which the first-type sub-frame is allocatable by first-type sub-frame candidate information that specifies a sub-frame to which the first-type sub-frame is allocatable, the first-type sub-frame candidate information being previously stored;
a fourth step of the base station device multiplexing the first-type sub-frame and the second-type sub-frame to which the first-type control signal and the second-type control signal are allocated, respectively, according to the type of each of the sub-frames determined in the first step; and
a fifth step of the base station device transmitting a signal resulting from the multiplexing in the fourth step.

14. A radio transmission method for a mobile station device that receives a signal in which a first-type sub-frame to which first-type data is allocated and a second-type sub-frame to which second-type data is allocated are time-multiplexed, the radio transmission method comprising:
a first step of the mobile station device receiving the signal time-multiplexed;
a second step of the mobile station device determining a type of a sub-frame of the signal received in the first step, based on first-type sub-frame candidate information and a second-type control signal of the sub-frame, the first-type sub-frame candidate information being previously stored, the first-type sub-frame candidate information being information specifying a sub-frame to which the first-type sub-frame is allocatable, the second-type control signal being allocated to a predetermined region of the sub-frame, the second-type control signal indicating a region in the sub-frame to be allocated, the first-type control signal including items corresponding to the type of the sub-frame to be allocated being allocated to the region, the second-type control signal further indicating a type of the sub-frame when the sub-frame is specified as a sub-frame to which the first-type sub-frame is allocatable by first-type sub-frame candidate information; and
a third step of the mobile station device detecting, from the sub-frame of the signal received in the first step, the first-type control signal including items corresponding to the type indicated by a result of the determination in the second step.
